(19)

Europäisches
Patentamt
European
Patent Office
Office européen
des brevets

(11) **EP 3 168 703 A1**

(12) **EUROPEAN PATENT APPLICATION**

(43) Date of publication:
17.05.2017 Bulletin 2017/20

(51) Int Cl.:
**G05B 23/02** (2006.01)

(21) Application number: 16197942.2

(22) Date of filing: 09.11.2016

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**MA MD**

(30) Priority: 11.11.2015 JP 2015221328

(71) Applicant: **Yokogawa Electric Corporation
Tokyo (JP)**

(72) Inventors:
• **ISHII, Masaki**
**Tokyo (JP)**
• **MOTOOKA, Ryuta**
**Tokyo (JP)**
• **FURIHATA, Ryouhei**
**Tokyo (JP)**
• **UOMORI, Yoshio**
**Tokyo (JP)**

(74) Representative: **Henkel, Breuer & Partner
Patentanwälte
Maximiliansplatz 21
80333 München (DE)**

(54) **FIELD DEVICE, FIELD DEVICE SYSTEM, AND DIAGNOSTIC METHOD**

(57)     A field device for measuring information associated with each of equipments installed in a plant includes: a measurer configured to measure running condition of the equipment, and to output measurement information representing result of the measurement; a diagnoser configured to diagnose the running condition of the equipment represented by the measurement information in accordance with predetermined first diagnosis rule, to diagnose result diagnosed in accordance with the first diagnosis rule in accordance with predetermined second diagnosis rule, and to output diagnosis result information representing result diagnosed in accordance with the second diagnosis rule as result of diagnosing the running condition of the equipment; wherein the second diagnosis rule is configured to be set condition for confirming influence of an external factor to the running condition of the equipment.

FIG. 1

**Description**

BACKGROUND OF THE INVENTION

Field of the Invention

The present invention relates to a field device, a field device system, and a diagnostic method.
Priority is claimed on Japanese Patent Application No. 2015-221328, filed November 11, 2015, the contents of which are incorporated herein by reference.

Description of Related Art

A plurality of field devices (measurers and operators) is installed for a purpose of monitoring a running condition of each of equipments arranged in a plant and controlling an operation of a facility, in a plant with various equipments. Each of the field devices are constructed by a dedicated communication network constituted within the plant. For example, each of the field devices is connected to a controller installed in a control room for controlling the operation of the equipment, and is constructed as a control system in the plant.
The Field device includes a sensor for measuring the running condition of running of the installed equipment (e.g., a behavior and a change of pressure, temperature, and flow rate, and the like), a diagnoser for diagnosing the result of the measurement by the sensor, a display for displaying information corresponding to the diagnosis result (e.g., normal and abnormal, etc.), and a communicator that transmits information of the diagnosis result to the controller via the communication network. Incidentally, the diagnoser may also be implemented as a part of functions which the controller controlling the whole of the field device implements. In addition, the field device may include an operator (e.g., actuators, etc.) for controlling the behavior of the installed equipment.
The diagnoser in the field device compares threshold value of predetermined measurement value with measurement value measured by the sensor for each item of the running condition of the equipment measured by the sensor, and diagnoses the running condition of the installed equipment. The running condition includes, for example, a condition of normal operation, an abnormal condition of occurring troubles such as failure and defect. Then, the diagnoser notifies the diagnosis result of the running condition of the equipment, for example, by lighting of a lamp of the display, and transmits (notifies) the diagnosis result to the controller via the communication network. In other words, the diagnoser diagnoses the running condition of the equipment and notifies the diagnosis result for each item of the respective running condition in the equipment. Incidentally, in the control system, a detection of an abnormality of the running condition of the equipment and a notification when an abnormality is detected is particularly important. Therefore, if the diagnoser detects that the running condition of the equipment is abnormal, then, for example, the diagnoser notifies the detection of the abnormality by turning on an abnormal lamp of the display or the like, and transmits (notifies) information representing the detected abnormality to the controller via the communication network.

Incidentally, in recent years, a wireless communication network communicating by radio waves compliant with industrial wireless standards has been popularized, as a dedicated communication network constructed within the plant. Therefore, the field device which performs independently incorporating batteries has been also increasing. The diagnoser in the field device also diagnoses further diagnoses items relating the incorporated battery (for example, a battery level, etc.) other than the diagnosis items based on the measurement value of the sensors described above. The diagnoser transmits or notifies the diagnosis result to the display and controller.

Conventionally, in the plant, if the notification representing that the abnormality is detected from one of the field devices is received, a field operator which recognized the abnormality of the field device notified to the controller visits the place on which the field device notified the detection of the abnormality is installed, and performs the operation corresponding the notified abnormality. At this time, the field worker totally determines whether or not to perform the operation corresponding to the notified abnormally, including not only the notified abnormality information, but also the place being installed the field device and the surrounding conditions and the environments of the equipment. And then the field worker performs the operation only when it is determined that it is necessary to perform the corresponding operation. Therefore, in the actual plant, even when the field device notifies to detect the abnormality, the field worker may not perform the operation corresponding to the notified abnormality.

That is because the field device detected the abnormality of another equipment which is different from the equipment with the field device, such as changing of the operation condition of the another equipment in prior or latter facility processes. It is not original abnormality of the equipment with the field device. Thus, the notification from the field device includes some incorrect notification (false alarm) due to the low detection accuracy of the field device.

Thus, for example, the field device technique such as Patent Reference 1 (Japanese Patent No. 5425629) has been proposed. Patent Reference 1 has been proposed a technique that the field device which diagnoses abnormalities on the basis of a plurality of information associated with the field device itself. Patent Reference 1 has been proposed the techniques such as the measurement value of the sensor, the history and the variation of the measurement value of the sensor, the influence received from the environment of the place such as a change of the internal temperature of the field device, the detection and the detection number of times of the extreme abnormality, information generated by the field device itself, and the well-known characteristics of the sensor, as information relating the field device itself. Thus, the field device applied the technique disclosed in Patent Reference 1, would be able to improve the accuracy of detection of the abnormality.

DISCLOSURE OF THE INVENTION

Problems to be Solved by the Invention

However, the reason why the detection accuracy of the abnormality of the field device is low, ie, the reason why the field device notifies the different abnormality from the original abnormality in the installed equipment is, for example, because each field device diagnoses the abnormality based only on the measurement value measured by the sensor of the field device. In other words, it is the reason that each field device does not diagnose the abnormality including the external factors that is impossible to acquire by the sensor provided in the field device itself.

Then, even the field device applying the technique disclosed in Patent Reference 1 is impossible to diagnose the abnormality including the external factors. Accordingly, even in the plant installed a field device applying the technique disclosed in Patent Reference 1, as described above, the field worker visits the location installed the field device which notified the detection of the abnormality, and confirms the external factors which is impossible for the sensor provided in the device to be able to acquire. It is necessary that the field worker finally determines the necessity of the operation according to the knowledge and the sense of the field worker. More specifically, the field worker visits the location installed the field device which notified the detection of the abnormality. And then, it needs that the field worker finally determines that the current notification from the field device is whether the incorrect notification of the abnormality which is due to the change of the running condition of the equipment of the prior and latter steps, or the notification of the original abnormality which is due to the disorders (abnormalities) of the equipment which the field device installed and the field device itself.

Therefore, it is considered that the field device avoids detecting the incorrect abnormality due to the external factors. That is, it is considered that the field device transmits all the obtained information to the controller, and the field worker in the control room finally determines, as the method to improve the accuracy of the detection of the abnormality. However, if the field device has a large amount of data, the field device needs much time to send data to the controller, and it is not practical. Also, it is also considerable to increase the location detecting the running condition of the equipment by increasing the number of the field devices. Further, it is also considerable to change to the configuration that the controller diagnoses the abnormality of the running condition of the equipment by combining a plurality of field devices. However, it needs many modifications to the current configuration in order to change this configuration. For example, it needs to develop software which realizes function of diagnosing the abnormality of the running condition at a specific facility by combining a plurality of field devices, and to install the software to the controller. Thus, it cannot be easily realized.

Incidentally, the causes of descending the precision of detecting the abnormality of the equipment by the field device include a failure of a sensor providing a field device and the field device itself such as aging. However, conventional field device cannot diagnose a potential of the false caused by the sensor aging of the field device and the field device itself.

According to the above reason, the controller cannot control all the matters but control a part of the matters in the plant. Accordingly, since the worker visits the location which is installed in the field device and confirms the external factors, and further the field worker has to make a final decision on the basis of the knowledge and sense of the field worker. Accordingly, the burden of the field worker is not reduced.

One aspect of the present invention provides a field device, a field device system, and a diagnostic method capable of improving an accuracy of detecting an abnormality of installed equipment in a plant.

SUMMARY

A field device of the present embodiment of the invention is for measuring information associated with each of equipments installed in a plant, the field device includes: a measurer that measures running condition of the equipment, and outputs measurement information representing result of the measurement; a diagnoser that diagnoses the running condition of the equipment represented by the measurement information in accordance with predetermined first diagnosis rule, diagnoses result diagnosed in accordance with the first diagnosis rule in accordance with predetermined second diagnosis rule, and outputs diagnosis result information representing result diagnosed in accordance with the second diagnosis rule as result of diagnosing the running condition of the equipment; wherein the second diagnosis rule is configured to be set condition for confirming influence of an external factor to the running condition of the equipment.

Moreover, the field device of the present invention further includes an external information acquirer that acquires external factor information including information which may be the external factor influencing the field device from an external device installed outside of the field device, wherein the second diagnosis rule corresponds to the external factor information, and is configured to be set condition for confirming that the field device is not influenced by the external factor included in the external factor information when the measurer measures the running condition of the equipment.

Further, the external factor information in the field device of the present invention includes information representing the running condition of the equipment which is positioned in either or both steps before or after the equipment in which the field device is installed in the step of the plant and performs the operation that may be the external factor.

Further, the external factor information in the field device of the present invention includes peripheral information which may be the external factor and which represents peripheral condition and environment of the position where the field device is installed.

Further, the peripheral information in the field device of the present invention includes information corresponding to information acquired by the sense of field worker performing a task for each of the equipment in the plant.

Further, the field device of the present invention further includes a notifier that notifies the running condition of the equipment represented by the diagnosis result information; wherein the notifier further includes: a display that displays the running condition of the equipment represented by the diagnosis result information; and a communicator that transmits the diagnosis result information via a communication network constructed in the plant.

Further, the second diagnosis rule in the field device of the present invention is configured to be sent via the communication network, and the communicator is configured to acquire the second diagnosis rule transmitted via the communication network and to set it to the diagnoser.

Moreover, a field device system for monitoring each of equipments installed in a plant and controlling operation of the equipments includes: a field device configured to measure information in associate with the equipment; a controller configured to communicate with the field device via a communication network constructed in the plant; wherein the field device further includes: a measurer configured to measure running condition of the equipment, and to output measurement information representing result of the measurement; a diagnoser configured to diagnose the running condition of the equipment represented by the measurement information in accordance with predetermined first diagnosis rule, to diagnose result diagnosed in accordance with the first diagnosis rule in accordance with predetermined second diagnosis rule, and to output diagnosis result information representing result diagnosed in accordance with the second diagnosis rule as result of diagnosing the running condition of the equipment; and a communicator configured to transmit the diagnosis result information via the communication network; wherein the controller transmits the second diagnosis rule which is set condition to confirm influence of an external factor to running condition of the equipment measured by the measurer, acquires the diagnosis result information obtained from the field device, and displays the running condition of the equipment represented by the diagnosis result information.

Furthermore, a diagnostic method of the present invention diagnosing running condition of each of equipments installed in a plant includes: measuring running condition of the equipment, and outputting measurement information representing result of the measurement; diagnosing the running condition of the equipment represented by the measurement information in accordance with predetermined first diagnosis rule, diagnosing result diagnosed in accordance with the first diagnosis rule in accordance with predetermined second diagnosis rule, and outputting diagnosis result information representing result diagnosed in accordance with the second diagnosis rule as result of diagnosing the running condition of the equipment; wherein the second diagnosis rule is configured to be set condition for confirming influence of an external factor to the running condition of the equipment.

According to the present invention, it is possible to improve the accuracy of detecting the abnormality of the equipment installed in the plant.

BRIEF DESCRIPTION OF THE DRAWINGS

Fig. 1 is a block diagram showing a schematic configuration of a field device in an embodiment of the present invention.
Fig. 2 is a flowchart showing an example of a diagnosis process of the processing procedure in the field device in the embodiment of the present invention.
Fig. 3 is a diagram showing an example of a schematic configuration of a field device system including a field device in the embodiment of the present invention.
Fig. 4 is a sequence diagram showing a flow of processing and operation in the plant which is constructed the field device system including the field device in the embodiment of the present invention.
Fig. 5 is a diagram showing a first specific example of an operation of the field device system including the field device in the embodiment of the present invention.
Fig. 6 is a flowchart showing a procedure of the diagnosis processing in the first specific example of the field device system including the field device in the embodiment of the present invention.
Fig. 7 is a diagram showing a second specific example of the operation of the field device system including the field device in the embodiment of the present invention.
Fig. 8 is a flowchart showing a procedure of the diagnosis processing in the second specific example of the field device system including the field device in the embodiment of the present invention.
Fig. 9 is a diagram showing a third specific example of the operation of the field device system including the field device in the embodiment of the present invention.

Fig. 10 is a flowchart showing a procedure of the diagnosis processing in the third specific example of the field device system including the field device in the embodiment of the present invention.

DETAILED DESCRIPTION OF THE PREFERRED EMBODIMENTS

<Field device>

Hereinafter, a number of embodiments of the present invention will be described below, with references made to the drawings.

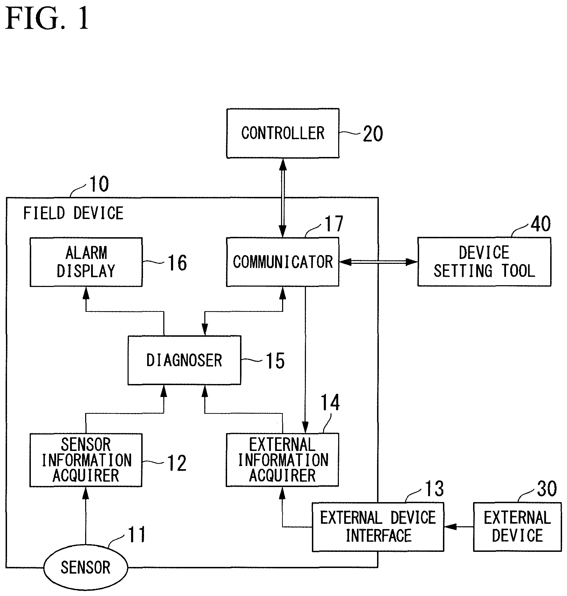

Fig. 1 is a block diagram showing a schematic configuration of a field device in an embodiment of the present invention. A field device 10 includes a sensor 11, a sensor information acquirer 12, an external device interface 13, an external information acquirer 14, a diagnoser 15, an alarm display 16, and a communicator 17. The field device 10 is installed in the equipment arranged in the plant. The field device 10 includes a measuring function measuring the running condition (e.g., pressure, temperature, flow, etc.) when the installed equipment is running, further, a measurer including a diagnostic function for diagnosing an running condition of the equipment based on a result of measurement, and an operator including a control function (e.g., such as an actuator) controlling the equipment which is installed in accordance with the input control signal. The field device 10 shown in Fig. 1 includes a measuring function and a diagnostic function.

Fig. 1 shows a controller 20 constituted as a control system (hereinafter, referred to as a "field device system 1 ") for controlling the operation and the monitoring the running condition of each equipment disposed in the plant, with the field device 10. The controller 20 controls the operation and the monitors the running condition of each equipment disposed in the plant. Further, the controller 20 also represents the result of the diagnosis by the diagnostic function of the field device 10. Incidentally, respective functions of the controller 20 (the monitoring function of the running condition of the equipment and the control function of the operation) may be realized by a program executed on a computer such as a workstation.

Incidentally, in general, a plurality of equipment is arranged in the plant. Therefore, a plurality of field device 10 is installed in the plant. Further, the controller 20 is arranged for each of the equipment of the predetermined control target in the plant, that is, a plurality of controller 20 are also disposed in the plant. Thus, the field device system 1 may be constituted by a plurality of field devices 10 and a plurality of controllers 20 installed in the plant. However, in the following description, for ease of explanation, the explanation will be made as assuming that the field device system 1 is constituted by the minimum unit of the configuration of one field device 10 and one controller 20 shown in Fig. 1. And, the description of the field equipment system 1 included a plurality of field device 10 will be described later.

The plant includes an industrial plant refining the petroleum and producing the chemical products, a plant managing and controlling a well-site and its surroundings such as a gas field and an oil field, a plant managing and controlling a hydro, thermal and nuclear power generation, a plant managing and controlling an environment power generation such as a solar and a wind power generation, and a plant managing and controlling such as a water and sewage and a dam.

Further, Fig. 1 shows an external device 30 and a device setting tool 40 as a component which can connect to the field device 10. The external device 30 is installed in a field area (field) within the plant and in the equipment being disposed in the plant, and further inputs information (hereinafter, referred to as "external device information") that can be an external factor affecting the field device 10. The device setting tool 40 sets the field device 10. The device setting tool 40 is carried by the field worker to carry out the inspection and the troubleshooting in the equipment installed in the plant. The device setting tool 40 is realized by a program executed in such as an operation terminal for supporting the operation by the field worker.

The sensor 11 is a measurer for measuring the current running condition (e.g., pressure, temperature, flow, etc.) in the equipment installed the field device 10 at the position where the field device 10 is installed. The sensor 11 outputs a measurement value of the result of the measurement to the sensor information acquirer 12 as sensor information.

The sensor information acquirer 12 acquires the sensor information being output from the sensor 11. The sensor information acquirer 12 converts the acquired sensor information into signal or information representing the running condition of the equipment in which the sensor 11 is measured, signal or information in predetermined format when the diagnoser 15 can utilize in diagnosing the running condition of the equipment. The sensor information acquirer 12 outputs the converted signal or information (hereinafter, referred to as "measurement information") to the diagnoser 15.

The external device interface 13 exchanges signal and information (data) with the external device 30. The external device 30 includes such as a sensor detecting and measuring the condition in the plant and the condition of the equipment. The external device interface 13 obtains external device information from the connected external device 30. The external device information represents the surrounding environment condition of the field device 10 and the running condition of other equipment that cannot be acquired by a sensor 11 provided in the field device 10. The external device interface 13 functions as an interface. The operation condition of the other equipment includes information such as a measurement value measured by the sensor provided in the other equipment, a position where other equipment is installed, and the running condition of the other equipment. The external device 30 is connected to the external device interface 13. The external device 30 outputs the external device information that can be utilized in diagnosing the operation condition of the equipment based on the measurement value measured by the sensor 11. The external device interface 13 can be connected to a plurality of external devices 30. The external device interface 13 outputs the external device information being input from the external device 30 to the external information acquirer 14.

The external device 30 may be a sensor device that is already installed in the plant. The sensor device, for example, measures the condition of the plant which was detected or measured, that is, the ambient conditions of the field device 10, and outputs sensor information representing the value and the changing amount of the measurement result. The external device 30 may be, for example, the different field devices 10 installed in the other equipment (the field device 10 including a measuring function and a diagnostic function, and the field device 10 including the control function), and the field device 10 which is already installed in the plant. The external device 30 is temporarily connected, for example, an operation terminal including a measuring function for measuring the ambient conditions, and is input the external device information.

Moreover, the external device information may include information regarding the condition of the other field devices 10, such as a behavior of the display, a measurement time, an open or closed condition, a running condition (a test run, an actual operation, dormant), an installation position and direction, an installed period, and deterioration. Further, the external device information may include information regarding the history of the other field devices 10, such as the number and frequency of the trouble such as failure or malfunction, the time of which the trouble occurs, the number dealing with the trouble, and a number of exchanges the components (component) of the other field devices 10.

The external device information includes information of the value or the change amount, such as, for example, sound, heat (temperature), humidity, flow rate, flow rate, pressure, rust, corrosion, discoloration, breakage, deformation, odor, gas, smoke, wind humidity (rain, sea, water's edge), viscosity (component of the fluid), dust, leakage, thunder, concentration (such as salinity), radiation, pressure, sunlight (light and dark), vibration, foam (coriolis), magnetic field, clogging of piping, foreign matter in the pipe (slurry). The external device information is not limited to the information described above, it may be any information that can be obtained from the device being already installed in the plant, or may be any information.

The external device information may include information acquired by sensibility of the field worker (ie, human). The external device information described below corresponds to the information which can be obtained by the visual of the workers, for example, rust, corrosion, discoloration, breakage, deformation, smoke, and sun (light and dark). It can be obtained by carrying out image processing on the obtained information at a predetermined time interval from an external device 30 which includes a visual sensor such as a camera in the plant. The image processing includes processing for image recognition and difference determination. The external device information, such as heat (temperature), humidity, pressure, Feng minute (rain, sea, and water's edge), atmospheric pressure, and vibration, corresponds to the information which can be obtained by the tactile of the field worker. Above-noted information can be obtained, for example, by performing a processing of obtaining a temporal variation amount on the information obtained from the external device 30 which includes a tactile sensor such as temperature sensor and pressure sensor in the plant. Further, for example, the external device information, such as sound corresponds to the information which can be obtained by the sense of hearing of the field worker. Above-noted information can be obtained, for example, by performing a processing of obtaining a frequency analysis and a volume determination processing on the sound obtained from the external device 30 which includes a hearing sensor such as a microphone or a frequency sensor in the plant. Further, for example, the external device information, such as odor, gas corresponding to the information which can be obtained by the sense of olfactory of the field worker. Above-noted information can be obtained, for example, by performing a processing of obtaining a component analysis on the gas obtained from the external device 30 which includes an olfactory sensor such as an odor sensor in the plant. The field device 10 can determine the running condition based on the knowledge and sense of the field worker such as performing in the conventional plant, by utilizing the external device information corresponding to the information obtained by the sensation of the field worker described above (i.e., human).

The external device information such as the other flow rate, flow velocity, viscosity (components of the fluid), dust, leakage, thunder, concentration (salinity, etc.), radiation, foam (Coriolis), magnetic field, clogging of piping, and foreign matter in the pipe (slurry) may be obtained by the field device 10 which is already installed in the plant. The field device 10 can determine the running condition of the equipment including information which cannot be obtained by the sensor 11 provided in the field device 10 itself by utilizing the external device information obtained by the other field device 10 which is already installed in such a plant.

The external information acquirer 14 acquires the external device information being outputted from the external device interface 13 similarly to the sensor information acquirer 12. The external information acquirer 14 converts the acquired external device information similar with the sensor information acquirer 12 to the external factor information, and outputs the external factor information to the diagnoser 15. The external factor information is the information being converted the external device information into the information format which the diagnoser 15 can be used in diagnosing the running condition of the equipment. The external information acquirer 14 may acquire the external device information from the external device interface 13, and then performs the image processing on the obtained external device information, and thereby converting the information into the information format which the diagnoser 15 can be used in diagnosing the running condition of the equipment.

Also, the communication unit 17 inputs the external device information to the external information acquirer 14. In this case, the external information acquirer 14 converts the external device information acquired from the communicator 17 to the external factor information, and then outputs to the diagnoser 15. Further, the external information acquirer 14 outputs the external device information acquired from the external device interface 13 to the communication unit 17 in response to a request from the communicator 17. The external device information acquired from the communication unit 17 includes, for example, an external device information which the controller 20 performs the image processing to the external device information corresponding to the acquired information obtained using the field operators sensory and acquired from the external device 30, that is, an external device information which the controller 20 processed in place of the external information acquirer 14.

The diagnoser 15 diagnoses whether the operation condition of the equipment is abnormal according to the predetermined diagnosis rule based on the measurement information acquired from the sensor information acquirer 12 and the external factor information acquired from the external information acquirer 14. In other words, the diagnoser 15 diagnoses whether the measurement value measured by the sensor 11 represents that the equipment is operating correctly or that the equipment is operating incorrectly (abnormality). The diagnoser 15 diagnoses including the external factors that may affect the diagnosis in the field device 10. The controller 20 sets the diagnosis rules to be used to diagnose the running condition of the equipment in the diagnoser 15. The diagnosis rule includes a variety of parameters. The parameters of the diagnosis rules may be reflected settings such a condition of the external factor. The external factor condition includes the condition of external factors, for example, when the field device 10 previously noted the abnormality to verify the external factor, the field worker visited the equipment being installed the field device 10, then the field worker determined finally not to perform the operation of the abnormality corresponding based on the knowledge of the field operators, that is, the condition of the external factor which the field worker can determines that the equipment is operating correctly.

The diagnoser 15 outputs the diagnosis result information to each of the alarm display 16 and the communicator 17. The diagnosis result information is diagnosis result information obtained by diagnosing the running condition of the equipment according to the predetermined diagnosis rule. The diagnoser 15 can diagnose whether or not the running condition of the equipment is abnormal. In addition, the diagnoser 15, for example, can diagnose regarding a warning that the measurement value measured by the sensor 11 means in a range which the diagnoser 15 can diagnose that the equipment is operating normally and the value which is close to the boundary between the normality and the abnormality. Although the controller controls the whole of the field device 10, the diagnoser 15 may be implemented as part of the functions of the controller.

The alarm display 16 displays (notifies) an alarm in accordance with the diagnosis result information acquired from the diagnoser 15. The alarm display 16 includes a plurality of display (e.g., normal lamps, abnormality lamps, and warning lamps) for representing the running condition of the equipment. The operating state of the equipment includes the running condition of the equipment in which the field device 10 is installed such as the normal, the abnormal, and the warning. The alarm display 16 includes a plurality of the display (e.g., the normal lamp, the abnormality lamp, and the warning lamp) for representing whether or not the measurement value measured by the sensor 11 indicates the operation of the installed equipment is normal. The alarm display 16 can turns one or more of the normal lamp, the abnormality lamp or any warning lamp in accordance with the running condition of the equipment which the diagnosis result information obtained from the diagnoser 15 indicates, and thereby the alarm display 16 represents (notifies) the current running condition of the equipment to the field operators.

More specifically, the alarm display 16 turns on the normal lamp when the diagnosis result information obtained from the diagnoser 15 represents that the condition of the equipment is normal. The alarm display 16 turns on the abnormality lamp when the diagnosis result information obtained from the diagnoser 15 indicates the abnormality. The alarm display 16 turs on the warning lamp when the diagnosis result information obtained from the diagnoser 15 represents that it is the normal as the running condition of the equipment and that it is close to the boundary between the normality and the abnormality.

The alarm display 16 receives an operation to the field device 10 by the field worker. The alarm display 16, for example, may include an operation unit (not shown) such as buttons and switches. In this configuration, the field worker inputs information by operating the operator (not shown). The alarm display 16 outputs the information the field worker entered into the controller or the like (not shown). The controller controls the whole of the field device 10. Thus, the field worker can operate the operator (not shown) such as the buttons and the switches to set the field device 10, and may change the settings.

The alarm display 16 can display the alarm on a display, for example, such as a liquid crystal display (LCD). In this configuration, the alarm display 16 can also display, for example, the measurement value measured by the sensor 11 on the liquid crystal display, in addition to the normality, the abnormality, or the warning. The alarm display 16 receives the operation to the field device 10 by the field worker. The alarm display 16 may be, for example, a touch panel in combination with the operator such as pressing sensor and the display device. In this configuration, when the field worker operates the touch panel, the alarm display 16 outputs information corresponding to various touch operations such as the controller. A variety of touch includes tapping, flicking, and the like. Thus, the field worker can operate the touch panel to set the field device 10, or can change the settings.

The communicator 17 communicates with the controller 20. The communicator 17 is connected to the controller 20 through a field digital process communication network dedicatedly constituted in the plant. The field Digital process communication network performs with each device transmitting and receiving such data using a variety of communication standards and communication systems. Various communication standards and communication systems includes, for example, industrial wireless standards such as ISA 100.11 a, a sensor network system such as a wireless standard, communication standards mixed the wireless communication and the wired communication such as Wireless/Wired HART, FOUNDATION (registered trademark) field bus, field bus standards such as PROFIBUS (PROCESS FIELD BUS). The field digital process communication network, for example, may be constituted in the plant by the wireless standard such as common Wi-Fi (registered trademark).

The communicator 17 transmits (notifies) the diagnosis result information obtained from the diagnoser 15 via the field digital process communication network to controller 20. The controller 20, in the same manner as the alarm display 16, displays the alarm corresponding to the transmitted the diagnosis result information to represents (notifies) the current running condition of the equipment to the field worker. The controller 20 presents the running condition of the equipment being installed the field device 10 to the field worker who are away to the field device 10. The controller 20 may present the running condition of the equipment such as normal, abnormal, or a warning by representing the running condition of the equipment same as the alarm display 16. The controller 20, for example, may represent the running condition of the equipment by presenting such data of the measurement value measured by the sensor 11.

The communicator 17 receives the control signal from the controller 20 via the field digital process communication network. The communicator 17 outputs the control signal to the diagnoser 15, the external information acquirer 14, and the controller (not shown). The controller controls the whole of the field device 10. The control signal contains a diagnosis rule being set by operating the controller 20 by the field worker. In the diagnosis rule, the external factors conditions are reflected the settings such as the condition of the external factor in the case the field worker finally determined not to perform the operation corresponding to the diagnosis result based on the knowledge. Thus, the diagnoser 15 in the field device 10 diagnoses the running condition of the equipment according to the predetermined diagnosis rule contained in the control signal. The control signal includes a request signal including the external device information which the field worker requested to the external information acquirer 14 by operating the controller 20. In the field device 10, the external information acquirer 14 outputs the external device information to the communicator 17, and the communicator 17 transmits the external device information acquired from the external information acquirer 14 to the controller 20. The control signal includes the external device information inputted by the field worker operating the controller 20. Thus, in the field device 10, the external information acquirer 14 obtains external device information included in the control signal similar to the external device information being acquired from the external device interface 13, and converts the external device information into the external factor information to output to the diagnoser 15.

The communicator 17 is connected with a device setting tool 40 and communicates thereto. The communication between the communicator 17 and the device setting tool 40 may be, for example, a short-range wireless communication such as Bluetooth (registered trademark), a wireless communication such common Wi-Fi (registered trademark). In a work site where the field device 10 is installed, for example, the field worker carries the operation terminal (the operation terminal being executed the device setting tool 40) to set the field device 10, and changes the diagnosis rule. And the communicator 17 is connected to the device setting tool 40 when retrieving the information (data) from the field device 10. The field device 10 is operated by the device setting tool 40 in the same manner as the controller 20. In addition, the field device 10 may be connected to the device setting tool 40 by the external device interface 13.

Next, a description will be given of the diagnosis processing in the diagnoser 15 provided in the field device 10.

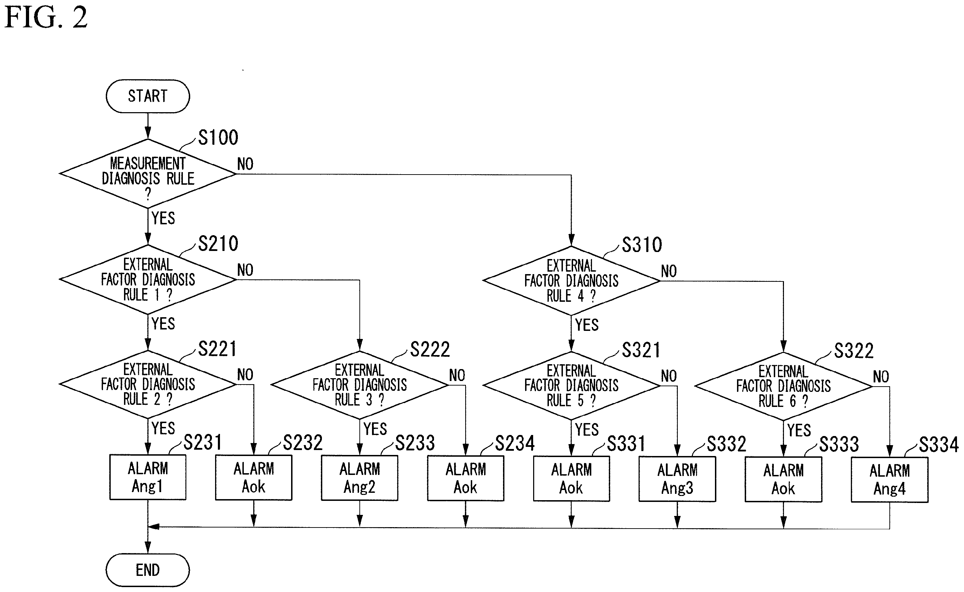

Fig. 2 is a flowchart showing an example of a diagnosis processing of the processing procedure in the field device in the embodiment of the present invention. In the following description, an example of a case of diagnosing the running condition of the equipment according to the predetermined diagnosis rule, on the basis of the one measurement information which the diagnoser 15 acquired from the sensor information acquiring unit 12 and the six external factor information which the diagnoser 15 acquired from the external information acquirer 14. In the following description, the diagnosis rule (hereinafter, referred to as "the external factor diagnosis rule") of the external factor for determining not to perform the operation corresponding to finally the diagnosis result factors which the field worker operated and set the controller 20 based on the six external factor information is preset to the diagnoser 15.

In the diagnosis processing in the diagnoser 15, firstly the diagnoser 15 diagnoses the measurement information obtained from the sensor information acquirer 12 in accordance with the measurement diagnosis rule (step S100). The measurement diagnosis rule is the diagnosis rule for diagnosing the measurement value measured the sensor 11, and is preset by the controller 20. The measurement diagnosis rule is the same as the diagnosis rule used when diagnosing the running condition based on the measurement result measured the conventional field device by the sensor. The value (parameter) representing such as the range of the measurement value of the sensor 11 representing that the running condition of the equipment is normal is set to the measurement diagnosis rules. The diagnoser 15 determines whether the measurement information conforms to the measurement diagnosis rule in the diagnosis in step S100. That is, the diagnoser 15 determines whether the measurement value of the sensor 11 which the measurement information represents is outside the range which the running condition of the equipment is normal. In other words, it is determined whether or not the running condition of the equipment is abnormal in the diagnosis in step S100.

In diagnosis result in step S100, if the measured information does not conform to the measurement diagnosis rule (step S100 is given "YES"), the diagnoser 15 determines that the running condition of the equipment is abnormal. The diagnosis processing of the diagnoser 15 proceeds to step S210.

The diagnoser 15 diagnoses (verifies) the diagnosis result in step S100 in accordance with an external factor diagnosis rule 1 (step S210). The external factor diagnosis rule 1 refers to a first external factor diagnosis rule which is preset by the controller 20 in accordance with a first external factor information which is input from the external information acquirer 14. In other words, the diagnoser 15 diagnoses the determination result in step S100 that the "running condition of the equipment is abnormal" (step S210). The parameter is set to the external factor diagnosis rule 1. The parameter, for example, represents a condition to confirm that the measurement value of the sensor 11 has not become an abnormal value by the influence of the first external factor. That is, the parameter represents the condition to confirm that the field device 10 is not affected by the first external factor. Then, it is determined whether the measurement information conforms to the external factor diagnosis rule 1 in the diagnosis in step S210. That is, it is determined whether the field device 10 is not affected by the first external factor in the diagnosis in step S210.

In step S210, if the diagnosis result conforms to the external factor diagnosis rule 1, the diagnoser 15 determines that the running condition of the equipment is abnormal, and the diagnosis processing of the diagnoser 15 proceeds to step S221. That is, when the field device 10 is not affected by the first external factor and the measurement value of the sensor 11 represents that the plant is operating abnormally (step S210 is "YES "), the diagnoser 15 determines the running condition of the equipment is abnormal even if the diagnoser 15 diagnoses including the external factor, the diagnosis processing of the diagnoser 15 proceeds to step S221.

Then, the diagnoser 15 diagnoses (verifies) a determination result that" the running condition of the equipment is abnormal" in step S210, in accordance with an external factor diagnosis rule 2 (step S221). The external factor diagnosis rule 2 refers to a second external factor diagnosis rule which is preset by the controller 20 in response to the second external factor information which is input from the external information acquirer 14. Incidentally, the external factor diagnosis rule 2 is also set a parameter representing a condition which is available of confirming that the field device 10 is not affected by the influence of the second external factor, based on the similar concept to the external factor diagnosis rule 1. And, even in the diagnosis in the step S 221, as similar to the diagnosis in step S210, it is determined whether the measurement information conforms to the external factor diagnosis rule 2, i.e., it is determined whether the field device 10 conforms to the effect of the second external factor.

In the result of the diagnosis in step S221, if the measurement information conforms to the external factor diagnosis rule 2 ("YES" in step S221), the diagnoser 15 determines the operation condition of the equipment is abnormal if the diagnoser 15 diagnoses including the second external factor. That is, if field device 10 does not receive the influence of the second external factor and the measurement value of the sensor 11 represents that the actual equipment is operating abnormally ("YES" in step S221), the diagnoser 15 determines the running condition of the equipment is abnormal even if the diagnoser 15 diagnoses including the second external factor. In other words, the diagnoser 15 determines the diagnosis result is normal in step S100, even if the diagnoser 15 diagnoses including the first and second external factor, the process proceeds to step S231. That is, the diagnoser 15 determines that the running condition of the field device 10 is practically abnormal, the diagnosis processing of the diagnoser 15 proceeds to step S231.

The diagnosis result information representing that the running condition of the equipment is abnormal even if the diagnosis includes the first and second external factors, is referred to as alarm Ang1. In step S231, the diagnoser 15 respectively outputs the alarm Ang1 to the alarm display 16 and the communicator 17 to complete the diagnosis processing. Thus, the alarm display 16 turns on the abnormal lamp according to the alarm Ang1 obtained from the diagnoser 15. The communicator 17 transmits such as the alarm Ang1 obtained from the diagnoser 15 to the controller 20. The controller 20 displays the abnormal alarm corresponding to the alarm Ang1, and thereby represents that the current running condition of the equipment is abnormal to the field worker.

On the other hand, according to the diagnosis result in step S221, if the measurement value of the sensor 11 represents that the operation of the equipment is abnormal ("NO" in step S221) because the diagnosis result does not conform to the external factor diagnosis rule 2, the diagnoser 15 diagnoses including the second external factor to determine the running condition of equipment is not abnormal. That is, in the case that the measurement value of the sensor 11 represents that the operation of the equipment is abnormal by the field device 10 is affected by the second external factor ("NO" in step S221), the diagnoser 15 diagnoses including the second external factor to determine the running condition of the equipment is not abnormal. The diagnoser 15 diagnoses including the first and second external factor to determine that the diagnosis result of step S100 is not correct, the process proceeds to step S232. That is, the diagnoser 15 determines the running condition of the field device 10 is practically normal, the diagnosis processing of the diagnoser 15 proceeds to step S232.

The diagnosis result information representing that the running condition of the equipment is normal if the diagnosis includes the first and second external factors referred to as the alarm Aok. In step S232, the diagnoser 15 outputs the alarm Aok to each of the alarm display 16 and the communicator 17 to complete the diagnosis processing. Thus, the alarm display 16 turns on the normal lamp corresponding to the alarm Aok obtained from the diagnoser 15. The communicator 17 transmits such as the alarm Aok obtained from the diagnoser 15 to the controller 20. The controller 20 displays the normal alarm in response to the transmitted alarm Aok to represent the running condition of the current equipment is normal to the field worker.

On the other hand, according to the diagnosis result in step S210, if the diagnosis result does not conform to the external factor diagnosis rule 1 ("NO" in step S210), the diagnoser 15 diagnoses including the first external factor to determine the running condition of the equipment is not abnormal, the diagnosis processing of the diagnoser 15 proceeds to step S222. In other words, if the measurement value of the sensor 11 represents the equipment is operating abnormally because the field device 10 is affected the influence of the first external factor ("NO" in step S210), the diagnoser 15 diagnoses including the first external factor to determine that the running condition of the equipment is not abnormal, the diagnosis processing of the diagnoser 15 proceeds to step S222.

A third external factor diagnosis rule preset by the controller 20 corresponding to the third external factor information acquired from the external information acquirer 14, hereinafter, referred to as an external factor diagnosis rule 3. In accordance with the external factor diagnosis rule 3, the diagnoser 15 diagnoses (verifies) the determination result that though the diagnosis is "the running condition of the equipment is abnormal" in step S100, the diagnosis is " the running condition of the equipment is not abnormal" in step S210 (step S222). Incidentally, the external factor diagnosis rule 3 is set the parameter which represents the conditions in which it can be confirmed that, for example, the value of the sensor 11 does not become the abnormal value due to the influence of the third external factor. That is, the external factor diagnosis rule 3 is set the parameter which represents the condition in which it can be confirmed that the field device 10 is not affected by the third external factor. In other words, the external factor diagnosis rule 3 is set the parameter which represents the conditions in which it can be confirmed that the value of the sensor 11 became the abnormal value due to the influence of only the first external factor, the value of the sensor 11 does not become the abnormal value due to the influence of the third external factor. That is, the field device 10 is set the parameter which represents the condition in which it can be confirmed that the field device 10 is not affected by the first and third external factor. Also in diagnosis in the step S222, similar to the diagnosis in step S221, the field device 10 determines whether the measurement information conforms to the external factor diagnosis rule 3. That is, it is determined whether the field device 10 is not affected by both the first and third external factor.

In the result of the diagnosis in step S222, if the measurement information conforms to the external factor diagnosis rule 3 ("YES" in step S222), the diagnoser 15 diagnoses including the second external factor to determine the operation condition of the equipment is abnormal. That is, if field device 10 is not affected the third external factor and the measurement value of the sensor 11 represents that the actual equipment is operating abnormally by the influence of only the first external factor ("YES" in step S221), the diagnoser 15 diagnoses including the third external factor to determine the running condition of the equipment is abnormal. In other words, the diagnoser 15 diagnoses including the first and third external factor to determine the diagnosis result is normal in step S100 and the diagnosis result is abnormal in step S210, and the process proceeds to step S233. That is, the diagnoser 15 determines that the running condition of the field device 10 is practically abnormal, the diagnosis processing of the diagnoser 15 proceeds to step S233.

The diagnosis result information representing that although it is not certain that the running condition of the equipment is abnormal only the diagnosis including the first external factor, the running condition of the equipment is abnormal if the diagnosis includes the third external factor. In step S233, the diagnoser 15 outputs the alarm Ang2 to each of the alarm display 16 and the communicator 17 to complete the diagnosis processing.

Thus, the alarm display 16 turns on the abnormal lamp corresponding to the alarm Ang2 obtained from the diagnoser 15. The communicator 17 transmits such as the alarm Ang2 obtained from the diagnoser 15 to the controller 20. The controller 20 displays the abnormal alarm in response to the transmitted alarm Ang2 to represent the running condition of the current equipment is abnormal to the field worker.

On the other hand, according to the diagnosis result in step S222, if the diagnosis result does not conform to the external factor diagnosis rule 3 ("NO" in step S222), the diagnoser 15 diagnoses including the third external factor to determine the running condition of the equipment is not abnormal. In other words, if the measurement value of the sensor 11 represents the equipment is operating abnormally because the field device 10 is affected the influence of the first and third external factor ("NO" in step S222), the diagnoser 15 diagnoses including the third external factor to determine that the running condition of the equipment is not abnormal. This, the diagnoser 15 diagnoses including the first and third external factor to determine the diagnosis result is incorrect in step S100 and the diagnosis result is correct in step S210, and the diagnosis processing of the diagnoser 15 proceeds to step S222. Thus, the diagnoser 15 diagnoses including the first and third external factor to determine the running condition of the field device 10 is practically normal, the diagnosis processing of the diagnoser 15 proceeds to step S234.

In step S234, the diagnoser 15 outputs the alarm Aok which represents the running condition is normal if the diagnosis includes the first and third external factor to each of the alarm display 16 and the communicator 17 to complete the diagnosis processing. Thus, the alarm display 16 turns on the normal lamp, the controller 20 represents that the running condition of the current equipment is normal to the field worker.

In diagnosis result in step S100, if the measured information conforms to the measurement diagnosis rule ("YES" in step S100), the diagnoser 15 determines that the running condition of the equipment is normal. The diagnosis processing of the diagnoser 15 proceeds to step S310.

A fourth external factor diagnosis rule preset by the controller 20 corresponding to the fourth external factor information acquired from the external information acquirer 14, hereinafter, referred to as an external factor diagnosis rule 4. The diagnoser 15 diagnoses (verifies) the diagnosis result in step S100 in accordance with the external factor diagnosis rule 4 (step S310). In other words, the diagnoser 15 diagnoses the determination result that "the running condition of the equipment is normal" (step S310). The external factor diagnosis rule 4 is set the parameter which represents the conditions in which it can be confirmed that, for example, the value of the sensor 11 does not become the normal value due to the influence of the fourth external factor. That is, the field device 10 is set the parameter which represents the condition in which it can be confirmed that the field device 10 is not affected by the fourth external factor. Then, it is determined whether the measurement information conforms to the external factor diagnosis rule 4 in the diagnosis in step S310. That is, it is determined whether the field device 10 is not affected by the fourth external factor.

In the result of the diagnosis in step S310, if the diagnosis result conforms to the external factor diagnosis rule 4, that is, the field device 10 is not affected by the fourth external factor and the measurement value of the sensor 11 represents that the plant is operating normally ("YES" in step S310), the diagnoser 15 determines the running condition of the equipment is abnormal even if the diagnoser 15 diagnoses including the fourth external factor, the diagnosis processing of the diagnoser 15 proceeds to step S321.

A fifth external factor diagnosis rule preset by the controller 20 corresponding to the fifth external factor information acquired from the external information acquirer 14, hereinafter, referred to as an external factor diagnosis rule 5. The diagnoser 15 diagnoses (verifies) a determination result that "the running condition of the equipment is normal" in step S310, in accordance with the external factor diagnosis rule 5 (step S321). The external factor diagnosis rule 5 is also set a parameter representing a condition which is available of confirming that the field device 10 is not affected by the influence of the fifth external factor, based on the similar concept to the external factor diagnosis rule 4. Also in diagnosis in the step S321, similar to the diagnosis in step S310, the diagnoser 15 determines whether the measurement information is conformed to the external factor diagnosis rule 5. That is, the diagnoser 15 determines whether the measurement information is affected by the fifth external factor.

As a result of the diagnosis in the step S321, if the measurement information conforms to the external factor diagnosis rule 5 ("YES" in step S321), the diagnoser 15 determines that the running condition of the equipment is normal if the diagnosis includes the fifth external factor. That is, in a case that the field device 10 is not affected the fifth external factor, further, the measurement value of the sensor 11 represents that the actual equipment is operating normally ("YES" in step S321), the diagnoser 15 determines the running condition of the equipment is normal if the diagnosis includes the fifth external factor. In other words, the diagnoser 15 determines that the diagnosis result in step S 100 is correct, even if the diagnoser 15 diagnoses including the fourth and fifth external factor, and the process proceeds to step S331. That is, the diagnoser 15 determines that the running condition of the field device 10 is practically normal, and the diagnosis processing of the diagnoser 15 proceeds to step S331.

Then, in step S331, the diagnoser 15 outputs the alarm Aok representing that the running condition of the equipment is normal to each of the alarm display 16 and the communicator 17, even if the diagnoser 15 diagnoses including the fourth and fifth external factors, and the diagnosis processes completes. As a result, the alarm display 16 turned on the normal lamp, the controller 20 presents that the current running condition of the equipment is normal to the field worker.

On the other hand, as a result of the diagnosis in step S321, in a case that the measurement information does not conform to the external factor diagnosis rule 5 ("NO" in step S321), the diagnoser 15 diagnoses including the fifth external factor to determine that the running condition of the equipment is not normal. In other words, in a case that the measurement value of the sensor 11 represents that the equipment is operating normally because the field device 10 affected the fifth external factor ("NO" in step S321), the diagnoser 15 diagnoses including the fifth external factor to determine the running condition of the equipment is not normal. Thus, the diagnosis device 15 diagnoses including the fourth and fifth external factors to determine that the diagnosis result in step S100 is not correct, and the process proceeds to step S332. That is, the diagnoser 15 determines that the running condition of field device 10 is practically abnormal, and the diagnosis processing of the diagnoser 15 proceeds to step S332.

The diagnosis result information representing that the running condition of the equipment is abnormal if the diagnosis includes the fourth and fifth external factors, is referred to as alarm Ang1. In step S332, the diagnoser 15 outputs the alarm Ang3 to each of the alarm display 16 and the communicator 17 to complete the diagnosis processing. Thus, the alarm display 16 turns on the abnormal lamp according to the alarm Ang3 obtained from the diagnoser 15. The communicator 17 transmits such as the alarm Ang3 obtained from the diagnoser 15 to the controller 20. The controller 20 displays the abnormal alarm corresponding to the alarm Ang3, and thereby represents that the current running condition of the equipment is abnormal to the field worker.

On the other hand, according to the diagnosis result in step S310, if the measurement value does not conform the external factor diagnosis rule 4 ("NO" in step S310), the diagnoser 15 diagnoses including the fourth external factor to determine the running condition of equipment is not normal. That is, in the case that the measurement value of the sensor 11 represents that the equipment is operating normally by the field device 10 is affected by the fourth external factor ("NO" in step S310), the diagnoser 15 diagnoses including the external factor to determine the running condition of the equipment is not normal, the diagnosis processing of the diagnoser 15 proceeds to step S322.

A sixth external factor diagnosis rule preset by the controller 20 corresponding to the sixth external factor information acquired from the external information acquirer 14, hereinafter, referred to as an external factor diagnosis rule 6. In accordance with the external factor diagnosis rule 6, the diagnoser 15 diagnoses (verifies) the determination result that though the diagnosis is "the running condition of the equipment is normal" in step S100, the diagnosis is " the running condition of the equipment is not normal" in step S310 (step S322). The external factor diagnosis rule 6 is set the parameter which represents the conditions in which it can be confirmed that, for example, the value of the sensor 11 does not become the normal value due to the influence of the sixth external factor. That is, the external factor diagnosis rule 6 is set the parameter which represents the condition in which it can be confirmed that the field device 10 is not affected by the sixth external factor. In other words, the external factor diagnosis rule 6 is set the parameter which represents the conditions in which it can be confirmed that the value of the sensor 11 became the normal value due to the influence of only the fourth external factor, the value of the sensor 11 does not become the normal value due to the influence of the sixth external factor. That is, the field device 10 is set the parameter which represents the condition in which it can be confirmed that the field device 10 is not affected by the fourth and sixth external factor. Also in diagnosis in the step S322, similar to the diagnosis in step S321, the diagnoser 15 determines whether the measurement information conforms to the external factor diagnosis rule 6. That is, it is determined whether the diagnoser 15 is not affected by both the fourth and sixth external factor.

In the result of the diagnosis in step S322, if the measurement information conforms to the external factor diagnosis rule 6 ("YES" in step S322), the diagnoser 15 diagnoses including the sixth external factor to determine the operation condition of the equipment is normal. That is, if field device 10 is not affected the sixth external factor and the measurement value of the sensor 11 represents that the actual equipment is operating normally by the influence of only the fourth external factor ("YES" in step S322), the diagnoser 15 diagnoses including the sixth external factor to determine the running condition of the equipment is normal. In other words, the diagnoser 15 diagnoses including the fourth and sixth external factor to determine the diagnosis result is normal in step S100, and the diagnosis result is abnormal in step S310. That is, the diagnoser 15 determines that the running condition of the field device 10 is practically normal, the diagnosis processing of the diagnoser 15 proceeds to step S333.

In step S333, the diagnoser 15 outputs the diagnosis result information alarm Aok which represents that although it is not certain that the running condition of the equipment is normal only the diagnosis including the fourth external factor, the running condition of the equipment is normal if the diagnosis is performed including the sixth external factor to each of the alarm display 16 and the communicator 17 to complete the diagnosis processing. Thus, the alarm display 16 turns on the normal lamp, the controller 20 represents that the running condition of the current equipment is normal to the field worker.

On the other hand, according to the diagnosis result in step S322, if the diagnosis result does not conform to the external factor diagnosis rule 6 ("NO" in step S322), the diagnoser 15 diagnoses including the sixth external factor to determine the running condition of the equipment is not normal. In other words, if the measurement value of the sensor 11 represents the equipment is operating normally because the field device 10 is affected by the fourth and sixth external factor ("NO" in step S322), the diagnoser 15 diagnoses including the sixth external factor to determine that the running condition of the equipment is not normal. In other words, the diagnoser 15 diagnoses including the fourth and sixth external factor to determine the diagnosis result is normal in step S100 and the diagnosis result is abnormal in step S310. That is, the diagnoser 15 determines that the running condition of the field device 10 is practically abnormal, the diagnosis processing of the diagnoser 15 proceeds to step S334.

The diagnosis result information representing that the running condition of the equipment is abnormal if the diagnosis is performed including the fourth and sixth external factors, is referred to as alarm Ang4. In step S334, the diagnoser 15 outputs the alarm Ang4 to each of the alarm display 16 and the communicator 17 to complete the diagnosis processing. Thus, the alarm display 16 turns on the abnormal lamp corresponding to the alarm Ang4 obtained from the diagnoser 15. The communicator 17 transmits such as the alarm Ang4 obtained from the diagnoser 15 to the controller 20. The controller 20 displays the abnormal alarm in response to the transmitted alarm Ang4 to represent the running condition of the current equipment is abnormal to the field worker.

According to such the configuration and processing, the field device 10 measures the running condition when the equipment is operating, and diagnoses the running condition of the equipment according to the diagnosis rule similar to the conventional field device. Additionally, the field device 10 diagnoses (decides) whether the diagnosis result of the running condition of the equipment that is diagnosed same as the conventional field device is the correct result, in accordance with the diagnosis rule that are added according to the external device information acquired from the external device 30. Thus, the field device 10 can determine (verify) whether the diagnosis result of the diagnosis result of the running condition of the equipment that was operated based on the measured running condition is incorrect by the external factor. That is, the field device 10 can diagnose the running condition when the equipment is running including the external factor. Thus, the field device 10 can improve the accuracy of detecting an abnormality of operation of the equipment than conventional field device.

Also, when information corresponding to the information obtained by the sense of the field worker is included in the external device information, the field device 10 can previously reflect the settings such as the external factors when the field worker determines not to perform the operation on the basis of the external factor to the diagnosis rule which is intended to add. That is, the field worker can previously reflect the settings such as the conditions of the external factors when determining the equipment is operating normally to the diagnosis rule. Thus, the field device 10 can determine, according to the added diagnosis rule, same as the determination based on the feeling of the field worker being conventionally performed in the plant. That is, the field device 10 can determine similar to the field worker conventionally determine. Thus, in the plant which the field device 10 was set up, the field worker conventionally visited the location of the field device 10 to confirm the external factors, and finally determined the necessity of the corresponding operation based on the knowledge and feeling. It is possible to reduce such the burden of the field worker. That is, it is not necessary for the field worker to visit the location where the field device 10 is installed whenever the abnormality of the operation of the equipment is notified, such as in the prior art.

Fig. 2 showed the example of the case of diagnosing according to the each external factor diagnosis rule in each of the diagnosis processing by the diagnoser 15. That is, Fig. 2 showed the example of the case of diagnosing by using each external device information (verification) in each of the diagnosis processing by the diagnoser 15. However, the external device information used in each of the diagnosis processing in the diagnoser 15 is not limited to the each external device information. For example, the diagnoser 15 may diagnose (verify) utilizing the same external device information in either a plurality of the diagnosis processing.

<Field device system>

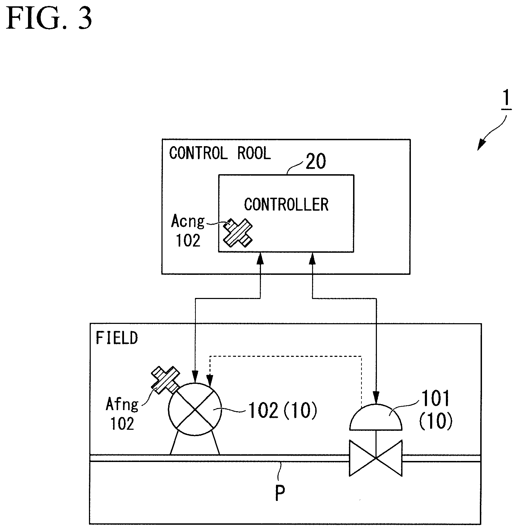

Next, a field device system 1 installed the field devices 10 in each of the equipments disposed in the plant will be described. Fig. 3 is a diagram showing an example of a schematic configuration of a field device system including a field device in the embodiment of the present invention.

A plurality of equipment is disposed in the plant, as described above. The plant includes, as shown in Fig. 1, the field device 10 constituted as a measuring device providing measuring function and diagnostic function, the field device 10 constituted as a measuring device providing only measuring function, and the field device 10 constituted as a measuring device providing controlling function in a mixed manner. Further, a plurality of controller 20 is disposed in the plant as described above. Therefore, the field device system 1 may be constituted by a plurality of field device 10 and a plurality of controller 20 installed in the plant as described above. Then, each of the field device 10 and the controller 20 is connected via the field digital process communication network in the field device system 1. However, the following description will be made as the field device system 1 including the two field devices 10 and the one controller 20 as shown in Fig. 3, for ease of description.

Fig. 3 shows an example of a case that the field device 10 as a pump and a flow meter is installed on the pipe P arranged in the field (field area) in the plant. In the following description, the field device 10 installed as the pump referred to as "field device 101 ", the field device 10 installed as the flow meter referred to as "field device 102". Further, Fig. 3 shows an example of a case where the controller 20 is installed in the control room in the plant.

The field device 101 controls, for example, the amount (flow rate) of feeding liquid products or semifinished products such as oil or chemicals (hereinafter, referred to as "liquid product") into the pipe P corresponding to the control signal. The field device 101 transmits (notifies) information indicative of the running condition via the field digital process communication network to the controller 20. Information representing the running condition of the field device 101 is the information representing whether the field device 101 is feeding the liquid product into the pipe P. That is, the information representing the running condition of the field device 101 is the information representing whether the field device 101 is operating as the pump. Moreover, the field device 101 outputs the information indicative of the running condition to the field device 102. The information representing the running condition acquired from the field device 101 is the external device information in the field device 102.

Note that the field device 101 includes a measuring function for measuring the flow rate of the liquid product, and transmits (reports) the information representing the running condition including the measured flow rate value (measurement value) to the controller 20 via the field digital process communication network to output to the field device 102.

The field device 102 measures the flow rate of the liquid product flowing through the pipe P to diagnose the flow condition of the liquid product in the pipe P according to a predetermined diagnosis rule. The flow condition of the liquid product in the pipe P which the field device 102 diagnoses includes the feeding condition which the field device 101 is fed the liquid product into the pipe P. In the following description, the state described above which the field devices 102 diagnoses simply referred to as "running condition". The diagnosis of the running condition of the pipe P by the field device 102 diagnoses (decides) whether the measured flow rate value (measurement value) is abnormal in accordance with the measurement diagnosis rule which is preset by the controller 20 and the preset external factor diagnosis rule by the controller 20 on the basis of the external device information required from the field device 102. And the field device 102 outputs and presents the diagnosis result information of the running condition of the pipe P to the alarm display 16, and transmits the diagnosis result information to the controller 20 via the field digital process communication network.

Fig 3 shows an example of a state which the field device 102 diagnoses whether the flow rate value which field device 102 measured including the running condition of the field device 101 and notifies the diagnosis result through the alarm display 16 and the controller20 provided in the field devices 102. More specifically, Fig. 3 shows that the field device 102 displays the "×" mark of the alarm Afng102 representing the detection of an abnormal flow rate value on the alarm display 16. Further, the Fig. 3 shows that the field device 102 in the controller 20 displays the "×" mark of the alarm Acng102 representing the diagnosis result which represents that the field device 102 detects the abnormal flow rate value is transmitted from the field device 102.

Thus, in the field device system 1, the field device 102 diagnoses the current running condition of the pipe P (in Fig. 3, the flow condition (flow rate) of the liquid product in the pipe P) including the external factor (in Fig. 3, the running condition of the field device 101), and presents (notifies) the diagnosis result by the alarm display 16 provided in the field device 102 and the controller 20 arranged in a control room to the field worker operating the operation in the plant. Here, the abnormality of the flow rate value presented by the field device 102 represents a result that the accuracy of the diagnosis is improved by the diagnosis including the external factor of the field device 102, the abnormality is likely to be original abnormality. In the plant, When the field worker recognizes the abnormality of the flow rate value notified from the field device 102 by the controller 20, for example, carries the operation terminal for carrying out the operation of the inspection operation and the troubleshooting of the equipment, and visits the location of the pipe P where the field device 102 is installed, and performs the operation for dealing with the abnormality and the operation for setting the field devices 102.

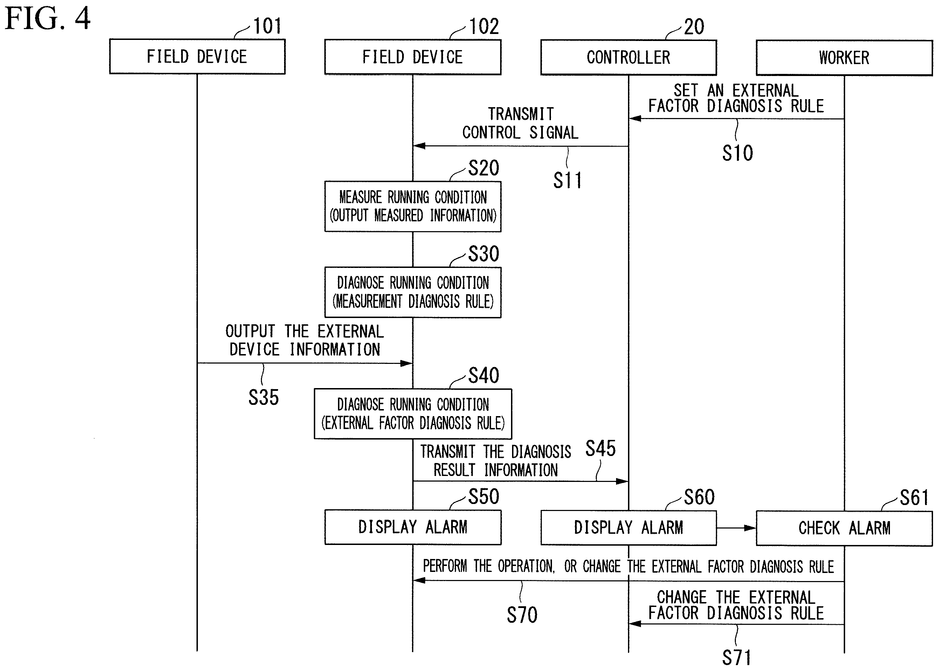

Here, a flow of the operations and the processing in the plant adapted the field device system 1 will be described. Fig. 4 is a sequence diagram showing a flow of processing and operation in the plant (processing sequence) which is constructed the field device system including the field device in the embodiment of the present invention. Fig. 4 shows an example of a flow of a processing and operation in the field device system 1 shown in Fig. 3. In the following description, the diagnoser 15 is preset the measurement diagnosis rule by the controller 20.

At first, the field worker operates the controller 20 in the control room, and sets the external factor diagnosis rule for finally determining not to perform the operation corresponding to the trouble (step S10). The external factor diagnosis rule which the field worker sets to the controller 20 sets the conditions of the running condition of the field device 101 that can be the external factors affecting the field device 102. That is, the field worker sets the operation of the field device 101 which can determine that the liquid product is normally flowing in the pipe P.

According to the operation, this operation controller 20 transmits the control signal including the external factor diagnosis rule via the field digital process communication network to the field device 102. Then, the field device 102 receives the control signal being transmitted through the field digital process communication network from the controller 20 (step S11). Thus, the external factor diagnosis rule set by the field worker is set to the diagnoser 15 provided in the field device 102.

Thereafter, the sensor 11 provided in the field device 102, for example, measures the flow rate of the liquid product flowing in the pipe P as the running condition of the pipe P at predetermined time or time interval, and outputs the sensor information (measurement value) of the measurement result to the sensor information acquirer 12 with the field device 102. Then, the sensor information acquirer 12 acquires the sensor information acquired from sensor 11, and converts the sensor information into the measurement information to output to the diagnoser 15 provided in the field device 102 (step S20).

Subsequently, the diagnoser 15 diagnoses the running condition of the pipe P acquired from the sensor information acquirer 12 as the measurement information according to the measurement diagnosis rule (step S30).

Moreover, the field device 101 outputs, for example, the information representing the running condition at the predetermined time or time interval to the field device 102. Then, the external device interface 13 provided in the field devices 102 outputs information (the external device information) representing the running condition acquired from the field device 101 to the external information acquirer 14 provided in the field device 102. The external information acquirer 14 acquires the external device information from the external device interface 13, and converts the external device information into the external factor information, and outputs to the diagnoser 15 provided in the field device 102 (step S35). Note that the timing of the processing in step S35 is limited to the timing shown in Fig. 4, it may be any timing.

Consequently, the diagnoser 15 diagnoses the diagnosis result in step S30 in accordance with the external factor diagnosis rule (step S40). Then, the diagnoser 15 outputs the diagnosis result information, that is, the diagnosis result of the running condition of the pipe P, to each of the alarm display 16 and the communicator 17 provided in the field device 102. Accordingly, the communicator 17 transmits the diagnosis result information acquired from the diagnoser 15 to the controller 20 via the field digital process communication network (step S45).

The alarm display 16 turns on the lamp according to the diagnosis result information acquired from the diagnoser 15 to represent the current running condition of the pipe P arranged the field device 102 to the field worker (step S50). Further, the controller 20 displays the alarm corresponding to the diagnosis result information acquired from the field device 102 via the field digital process communication network to represents the current running condition of the pipe P arranged the field device 102 to the field worker in the control room (step S60).

The field worker can confirm (recognize) the current running condition of the pipe P arranged the field device 102 by the alarm displayed on the controller 20 (step S61). When the alarm displayed on the controller 20 indicates that the current running condition of the pipe P is abnormal, the field worker, for example, carries the operation terminal, and visits the pipe P arranged the field device 102, and confirms the location arranged the field device 102 and the surrounding condition and environment of the pipe P. And, in case the pipe P is practically abnormal, the field worker performs the operation according to the abnormal (step S70).

Note that when the field worker confirms the location where the field device 102 arranged and the surrounding condition and environment of the pipe P, there is a case the pipe P is not abnormal. As the reason, it is considered that the external factor diagnosis rule set in step S10 is not adequate, such that there is spare in the terms of the running condition of the field devices 101 that can be the external factor affecting the field device 102. In this case, the field worker executes the device setting tool 40 by the operation terminal, and connects the operation terminal and the field device 102 via the communicator 17 or the external device interface 13, thereby changes (correctly revise) the external factor diagnosis rules (step S70). Accordingly, even if the field device 102 becomes same condition, no longer the field device 102 does not determine that the pipe P is abnormal. That is, the accuracy which the field device 10 detects an abnormality of the pipe P further improves. Incidentally, in a case that the alarm display 16 has a configuration for accepting the operation of the field worker, the field worker may operates the alarm display 16 to change (correctly revise) the external factor diagnosis rule.

In the case the pipe P is not abnormal, the field worker returns to the control room, and can change the external factor diagnosis rule by operating the controller 20 in the control room (step S71).

According to such the processing and the work flow (processing sequence), the field worker can properly set the external factor diagnosis rule of the field device system 1, and can improve the accuracy of detecting the abnormality of the equipment installed each of the field device 10. Thus, in the plant adapting the field device system 1, it is possible to reduce the burden of the field worker. It should be noted that the (skilled) field worker who has been experienced a lot of operations in the plant and has been familiar with the operation method for the trouble should firstly set the external factor diagnosis rule than the field worker who has been less experienced. Accordingly, the accuracy of which the field device 10 detects an abnormality of the equipment would be able to keep high from the initial stage.

<First specific example>

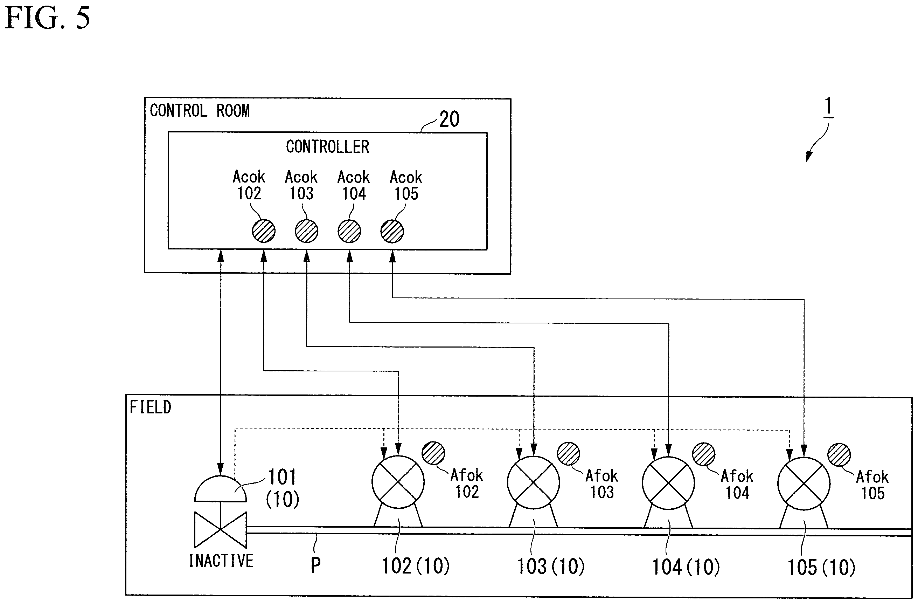

A specific example of diagnosing the running condition of the equipment including the external factor in the field device system 1 constituted in the plant which installed the field devices 10, will be described. Fig. 5 is a diagram showing a first specific example of an operation of the field device system 1 including the field device 10 in the embodiment of the present invention. Fig. 5 shows an example of a case that the five field devices 10 as a pump or a flow meter which is installed in the pipe P arranged in the field (field area) in the plant. More specifically, Fig. 5 shows the example of the case that the field device 101 which is the field device 10 installed as a pump, and the field devices 102-105 which are the four field devices 10 installed as a flow meter, are installed. Further, Fig. 5 shows the example of the case where the controller 20 is installed in the control room in the plant.

The field device 101 controls the amount (flow rate) of feeding liquid products into the pipe P corresponding to the control signal similarly with the field device shown in Fig. 3. The field device 101, same as the fields device 101 shown in Fig. 3, transmits (notifies) information indicative of the running condition via the field digital process communication network to the controller 20 to output each of the field devices 102 to 105. The information representing the running condition acquired from the field device 101 is the external device information in the field device 102 to 105.

Each of the field device 102 to 105, same as the field device 102 shown in Fig. 3, measures the flow rate of the liquid product flowing through the pipe P to diagnose whether the flow rate value (measurement value) is abnormal according to a predetermined diagnosis rule (the measurement diagnosis rule and the external factor diagnosis rule) as the running condition of the pipe P. And each of the field device 102 to 105, same as the field device 102 shown in Fig. 3, represents the diagnosis result of the running condition of the pipe P to the alarm display 16 provided in each of the field device 102 to 105 and to the controller 20 via the field digital process communication network.

More specifically, when the field device 101 is in operation, each of the field devices 102-105 outputs the diagnosis result information in running condition of the pipe P which is diagnosed on the basis of the measured flow rate value (measurement value) to the alarm display 16 and represents (notifies), and then transmits (notifies) to the control apparatus 20 via the field digital process communication network. The procedure described above is similar even when each of the installed field devices in the pipe P is a conventional field device.

On the other hand, if the field device 101 suspends in accordance with the acquired control signal, the motor of the pump provided in the field device 101 stops driving and closes the valve. And then the flow of liquid product in the pipe P stops, the field device 101 is in a state where the liquid product is not fed into the pipe P. In this case, in a case that each of the field devices installed in the pipe P is the conventional field device, each of the conventional field devices is affected by the field device 101 suspended, and outputs and represents the diagnosis result information representing that the running condition of the pipe P is abnormal to the alarm display 16, and transmits the diagnosis result information via the field digital process communication network to the controller 20. This is because the flow rate value (measurement value) measured in each of the conventional field devices becomes to a value outside a range of a measurement value representing that the liquid product is flowing in the pipe P. Thus, the field worker, in order to perform the operation corresponding to the notified abnormality, visits the location of the pipe P that each of the conventional field devices is installed. However, since the field device 101 is suspended, it does not need to perform the operation corresponding to the notification from each of the conventional field devices. In other words, the current notification from each of the conventional field devices become incorrect notices (false alarm) due to the accuracy of the abnormality detection in the field device is low.

In contrast, each of the field devices 102-105 installed on the pipe P diagnoses whether or not the measured flow rate value (measurement value) is abnormal based on the information including the running condition (dormant) acquired from the field device 101 as the external device information. When the field device 101 is suspended, the measured flow rate value (measurement value) generally becomes outside the range of measurement values representing that the liquid product flows in the pipe P. Therefore, each of the field devices 102-105 outputs the diagnosis result information representing that the running condition of the pipe P is normal and represents (notifies) based on the external device information representing that the field device 101 is dormant, and thereby transmits (notifies) to the control apparatus 20 via the field digital process communication network. That is, each of the field devices 102-105 is not affected by the suspension of the field device 101, and notifies the correct running condition of the pipe P to the field worker. Thus, the field worker need not visit the location of the pipe P where each of the field devices 102-105 is installed, according to the notification from each of the field devices 102-105.

Fig. 5, when the field device 101 is at rest, the diagnosis result representing that the operation status of the pipe P is normal, the alarm display 16 provided in each of the field devices 102-105 controller It shows an example of a state in which the notified by 20. More specifically, the field device 102 shown in Fig. 5, displays "○" mark of the alarm Afok102 representing the detection of the normal flow rate value on the alarm display 16, and displays "○" mark of the alarm Afok102 representing that the diagnosis result representing the field device 102 detects the normal flow rate is transmitted (notified) from the field device 102 on the controller 20. Similarly, each of the field devices 103 to 105 shown in Fig. 5 displays each of the alarm Afok103 to 105 of "○" mark representing the detection of the normal flow rate value on the alarm display 16 provided in each of the field devices 103 to 105. Similarly, the controller 20 shown in Fig. 5 displays the alarm Acok103 to 105 of "○" mark representing that the diagnosis result representing that each of the field devices 103 to 105 detected the normal flow rate value was transmitted (notified) from each of the field devices 103 to 105.

Thus, in the first specific example of the field device system 1, each of the field devices 102 to 105 diagnoses the flow rate of the liquid product of the pipe P as the current operating status including the running condition (operating or dormant) of the field device 101 which is the external factor. Thus, each of the field devices 102 to 105 notifies the correct running condition of the pipe P to the field worker without being affected that even if the field device 101 is during suspended.

In the first specific example, if it is notified that the running condition of the pipe P is abnormality, the pipe P is likely to be original abnormality. For this reason, the field worker visits the location of the pipe P where the field device 10 having notified that the running condition of the pipe P is abnormal is installed, and checks the surrounding condition and the environment. And then it is desirable for the field worker to operate the operation to deal with the abnormality. Incidentally, when there is no need to perform the operation corresponding to the running condition of pipe P which is notified to be abnormal, as well as the flow of the processing and operation (processing sequence) in the plant shown in Fig. 4, it is desirable to change (correctly revise) the external factor diagnosis rule.

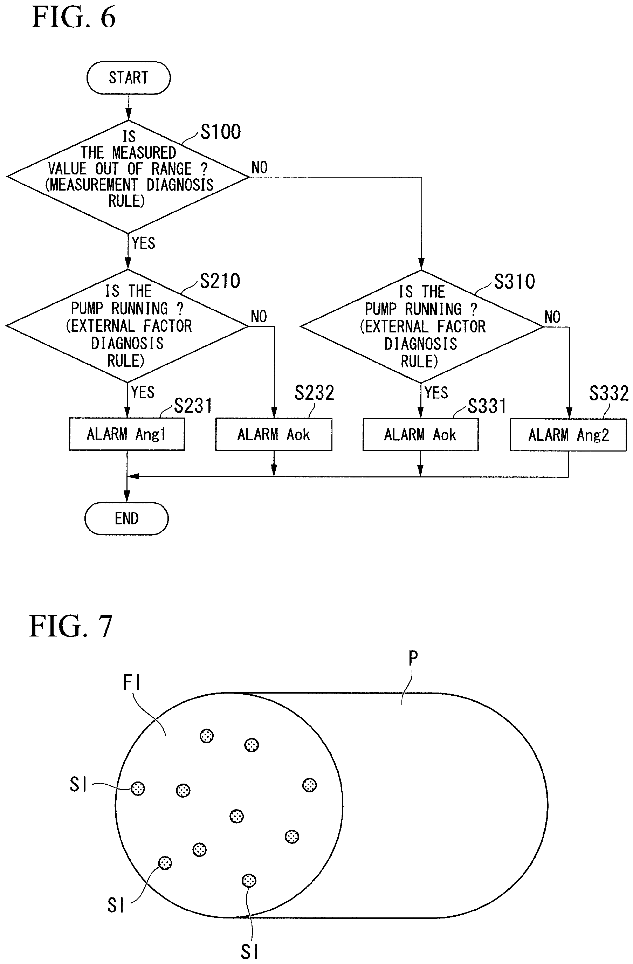

Next, in the first specific example, it will be described the diagnosis processing in the diagnoser 15 provided in the respective field devices 102 to 105. Fig. 6 is a flowchart showing a procedure of the diagnosis processing in the first specific example of the field device system 1 including the field device 10 in the embodiment of the present invention. Incidentally, Fig. 6 shows a procedure of a diagnosis processing which the diagnoser 15 performs when the field device 101 is dormant. In the first specific example, each of the field devices 102 to 105 diagnoses the running condition of the pipe P in accordance with the processing shown in Fig. 6. In the following description, representatively, the processing shown in Fig. 6 will be described as the processing of the diagnoser 15 provided in the field device 102.

Here, the field device 101 outputs information representing whether it is operating or dormant as the external device information representing the running condition. Then, in order to confirm that the field device 101 is in operation based on the external device information outputted from the field device 101, the diagnoser 15 is preset the external factor diagnosis rule by the controller 20.

The sensor 11 provided in the field device 102 measures the flow rate of the liquid products flowing through the pipe P when the field device 101 is in operation, shall be output the measurement values, for example, from the lower limit of the flow rate value = 4mA to the upper limit of flow rate = 20mA as the sensor information. Further, when the field device 101 is dormant, the sensor 11 provided in the field device 102, for example, outputs the measurement value of the flow rate value = 0 mA as the sensor information. Therefore, the diagnoser 15 is pre-set the flow rate value 4mA to 20mA in the measurement diagnosis rule as value (parameters) of range representing the operation condition of the pipe P is normal.

The diagnoser 15 diagnoses the measurement information acquired from the sensor information acquirer 12 in accordance with the measurement diagnosis rule (step S100). In the diagnosis in step S100, the diagnoser 15 determines whether the flow rate value PV represented in the measured information is the value outside the range of the flow rate value 4mA to 20mA which is set as the measurement diagnosis rule.

In result of the diagnosis of step S100, when the flow rate value PV represented by the measurement information is the value of outside the range of the flow rate value 4mA to 20mA ("YES" in step S100), the diagnoser 15 determines the running condition of the pipe P is abnormal, and then the diagnosis processing of the diagnoser 15 proceeds to step S 210. For example, if the field device 101 is dormant, since the flow rate value which the measurement information indicates is 0mA, the diagnosis processing of diagnoser 15 proceeds to step S210.

Then, the diagnoser 15 diagnoses (verifies) the diagnosis result that is "the running condition of the pipe P is abnormal" in step S100 in accordance with the external factor diagnosis rule (step S210). The diagnosis in step S210 determines whether the external factor information acquired from the external information acquirer 14 represents that the field device 101 is operating.

In the result of the diagnosis in step S210, if the field device 101 represents that it is in operation ("YES" in step S210), the diagnoser 15 determines that the running condition of the pipe P is abnormal, even if the diagnoser 15 diagnosed according to the external factor diagnosis rule, and then the diagnosis processing of the diagnoser 15 proceeds to step S 231.

In step S231, in result that the diagnoser 15 diagnoses according to the external factor diagnosis rule, the diagnoser 15 outputs the alarm Ang1 indicating that the running condition of the pipe P is abnormal to respectively the alarm display 16 and the communicator 17 to complete the diagnosis processing. Thus, the alarm display 16 turns on the abnormal lamp according to the alarm Ang1 acquired from the diagnoser 15. The communicator 17 transmits such as the alarm Ang1 acquired from the diagnoser 15 to the controller 20. The controller 20 displays the abnormal alarm corresponding to the alarm Ang1, and thereby indicates that the running condition of the pipe P is abnormal to the field worker. Incidentally, it is conceivable for the field worker to visit the location of the pipe P assuming that the process may be performed to prevent the leakage of the pipe P when the abnormal alarm corresponding to the alarm Ang1 was presented, because, for example, the flow rate of the liquid products flowing in the pipe P is lower than the lower limit due to the leakage of the pipe P in spite of the field device 101 is in operation.

On the other hand, as a result of the diagnosis in the step S210, if the field device 101 is not in operation, in other words, if the field device 101 is in dormant ("NO" in step S210), the diagnoser 15 determines the running condition of the pipe P is not abnormal if the diagnosis is performed in accordance with the external factor diagnosis rule, the diagnosis processing of diagnoser 15 proceeds to step S232.

In step S232, the diagnoser 15 outputs the alarm Aok representing that the running condition of the pipe P is normal to each of the alarm display 16 and the communicator 17 even if the diagnosis is performed in accordance with the external factor diagnosis rule, and thereby completes the diagnosis processing. Thus, the alarm display 16 turns on the normal lamp according to the alarm Aok acquired from the diagnoser 15. And the communicator 17 transmits the alarm Aok acquired from the diagnoser 15 to the controller 20. The controller 20 displays the normal alarm corresponding to the alarm Aok to represent that the running condition of the current pipe P is normal to the field worker.

On the other hand, as a result of the diagnostic steps S100, if the flow rate value representing the measured information is within the range of the flow rate value 4mA to 20mA ("NO" in step S100), the diagnoser 15 determines that the running condition of the pipe P is normal, the diagnosis processing of the diagnoser 15 proceeds to step S 310.

The diagnoser 15 diagnoses (verifies) the diagnosis result that the "running condition of the pipe P is normal" in step S100 in accordance with the external factor diagnosis rule (step S310). At the diagnosis in step S310, similarly to the diagnosis in step S210, the diagnoser 15 determines whether the external factor information acquired from the external information acquirer 14 represents that the field device 101 is in operation.

As a result of the diagnosis in step S310, in a case that the external factor information represents that the field device 101 is in operation ("YES" in step S310), the diagnoser 15 diagnoses determines that the running condition of the pipe P is normal even if the diagnosis is performed in accordance with the external factor diagnosis rule, and the diagnosis processing of the diagnoser 15 proceeds to step S331.

In step S331, the diagnoser 15 outputs the alarm Aok representing that the running condition of the pipe P is normal to each of the alarm display 16 and the communicator 17 even if the diagnosis is performed in accordance with the external factor diagnosis rule, and thereby completes the diagnosis processing. Thus, the alarm display 16 turns on the normal lamp, the controller 20 represents (notifies) that the running condition of the current pipe P is normal to the field worker.

On the other hand, as a result of the diagnosis in the step S310, if the field device 101 is not in operation (in dormant) ("NO" in step S310), the diagnoser 15 determines the running condition of the pipe P is not normal if the diagnosis is performed in accordance with the external factor diagnosis rule, the diagnosis processing of diagnoser 15 proceeds to step S232.

In step S332, the diagnoser 15 outputs the alarm Ang2 indicating that the running condition of the pipe P is abnormal if the diagnosis is performed in accordance with the external factor diagnosis rule to respectively the alarm display 16 and the communicator 17 to complete the diagnosis processing. Thus, the alarm display 16 turns on the abnormal lamp according to the alarm Ang2 acquired from the diagnoser 15. The communicator 17 transmits such as the alarm Ang2 acquired from the diagnoser 15 to the controller 20. The controller 20 displays the abnormal alarm corresponding to the alarm Ang2, and thereby indicates that the running condition of the pipe P is abnormal to the field worker. It is conceivable for the field worker to visit the location of the pipe P assuming that the process may be performed to repair the valve of the field device 101 when the abnormal alarm corresponding to the alarm Ang2 was presented, because, for example, the liquid products is flowing in the pipe P due to not closing the valve of the field device 101 in spite of the field device 101 is in dormant.

Thus, each of the field device 102 to 105 arranged on the pipe P in the field device system 1 of the first specific example diagnoses the current running condition of the pipe P (the flow rate of the liquid product in the pipe P in the first specific example) including the external factor (the running condition of the field device 101 in the first specific example). In the field device system 1 in the first specific example, each of the field device 102 to 105 present (notify) the diagnosis result by the alarm display 16 provided in the field device 102 to 105 and the controller 20 arranged in the control room to the field worker operating the operation in the plant. The running condition of the pipe P presented by each of the field device 102 to 105 represents a result that the accuracy of the diagnosis is improved by the diagnosis including the external factor of the field device 102 to 105. Therefore, if one of the field devices 102-105 notifies that the running condition of the pipe P is abnormal, the running condition is likely to be original abnormality. Therefore, it is desirable that the field worker performs the operation corresponding to the abnormality using the field device 10 that notified that the running condition of the pipe P is abnormal. Note that when the notified pipe P to be abnormal is not necessary to perform the operation corresponding to the running condition, the field worker performs to change (correctly correct) the external factor diagnosis rules, same as the flow of the processing and operation (processing sequence) in the plant shown in Fig. 4.

In the first specific example, the configuration that the field device 101 inputs information indicative of the running condition to the respective field devices 102-105 as the external device information is shown. However, the external device information input to each of the field devices 102 to 105 are not limited to the external device information shown in the first specific example. For example, in the field device system 1, the controller 20 controls the monitoring the running condition and the operation of the respective field devices 101 to 105. Accordingly, the controller 20 grasps the running condition of the field device 101. Therefore, it may be constituted that the controller 20 outputs (transmits) information indicative of the running condition of the field device 101 to each of the field devices 102-105 via the field digital process communication network as the external device information. At this time, the controller 20 may be included in the control signal used to be transmitted information (the external device information) indicative of the running condition of the field devices 101 to the respective field devices 102 to 105.

In the first specific example, the configuration is showed that the external device information which each field devices 102 to 105 acquires is only the external device information output by the field device 101. In other words, in the first specific example, the configuration is showed that the external device information is only the external device information output by the field device 101 located in any of the preceding field devices 102 to 105 in the process of the plant. However, the external device information each field devices 102 to 105 acquires is not limited to the external device information acquired from the preceding process of the plant, but it may be the external device information acquired from the subsequent process of the plant and the external device information acquired from both the preceding and subsequent processes of the plant. For example, as the external device information which the field device 102 acquirers, the field device 103 located on the subsequent process of the field device 102 in the process of the plant may acquire the diagnosis result information as the external device information. Also, for example, as the external device information which the field device 102 acquires, in addition to the external device information which the field device 101 outputs, the field devices 103 located in the subsequent process of the field device 102 in the process of the plant may acquire the diagnosis result information as the external device information. Similarly, other field devices 102 to 105 that can be external factors affecting each of the field device 102 to 105 may be inputted the diagnosis result information as the external device information of any of the field devices 102 to 105. As a result, each of the field devices 102 to 105 can diagnoses including the running condition (the running condition of the pipe P between each of the field device 101 to 105 in the first specific example) of the equipment which is running in the preceding and subsequent processes in the plant. It is possible to further improve the accuracy of detecting the abnormality. Thus, it is possible to further reduce the burden of operations of the field worker.

<Second specific example>

Then, another specific example of diagnosing the running condition of the equipment including the external factors in the field device system 1 which is constituted in the plant installed the field devices 10, will be described. In the second specific example, each equipment disposed within the plant and the configuration of the field device system 1 is the same as in the first specific example shown in Fig. 5. Accordingly, in the second specific example, same signs are used to the signs granted to each of the equipment shown in Fig. 5 in this description. The detailed description regarding the arrangement of the equipments in the plant and the operation of the each of the field devices 10 according to the second specific example will be omitted.

The second specific example is an example that it is able to notify the abnormality of the running condition of the pipe P, even if it is impossible to correctly measure the flow rate of the liquid products flowing in the pipe P due to contaminating foreign material (slurry) or foam (coriolis) to the liquid products flowing in the pipe P and accumulation of foreign matter (slurry) in the pipe P or the like. Fig. 7 is a diagram showing a second specific example of the operation of the field device system 1 including the field device 10 in the embodiment of the present invention.

Fig. 7 shows an example of a case where a plurality of slurry S1 contaminating in a liquid product F1 flowing in the pipe P is flowing together. When a plurality of the foams (coriolis) contaminating in the liquid products F1 flowing in the pipe P are flowing together, by replacing the foam (coriolis) to the slurry S1, it can be considered same as in the case of slurry S 1. Proportion M [%] of slurry S1 contaminated in the liquid product (hereinafter, referred to as "contamination amount M") can be calculated by the following equation (1).

$$M = Vs / (Vf\text{-}As1) \qquad (1)$$

In the above formula (1), the Vs represents volume (such as total amount per predetermined unit time) of the slurry S1 contaminated in the liquid products (hereinafter, referred to as "foreign matter volume".). The Vf represents volume (such as total per unit time) of the liquid products containing the slurry S1 flowing the pipe P (hereinafter, referred to as "liquid product volume"). Foreign matter volume Vs is, for example, may be a measurement value of the foreign matter detection sensor installed in the pipe P (it may be constituted in the field device 10), or value calculated based on the measurement value. The liquid product volume Vf can be calculated based on the flow rate value (measurement value) measured by the sensor 11. Since calculation of the foreign matter volume Vs based on the measurement value of the foreign matter detection sensor and calculation of the liquid product volume Vf based on the flow rate value measured by the sensor 11 can be performed by utilizing the existing technology, a detailed description thereof will be omitted.

In the second specific example, each of the field device 102 to 105 gets the foreign matter volume Vs as the external device information. Then, in the second specific example, the diagnoser 15 provided in the respective field devices 102 to 105 diagnoses the running condition of the pipe P with the foreign matter volume Vs.

More specifically, the diagnoser 15 calculates the liquid product volume Vf from the flow rate value (measurement value) of the liquid product (which is includes the slurry S1) flowing through the pipe P measured by the sensor 11, in each of the field devices 102 to 105, and further, the diagnoser 15 calculates the foreign matter contamination amount M from the above equation (1) using the liquid product volume Vf and the foreign matter volume Vs.

Thereafter, the diagnoser 15 revises the flow rate value (measurement value) of the liquid products including the slurry S1 measured by the sensor 11 by the following equation (2) using the calculated foreign matter contamination amount M, and corrects the flow rate value. The diagnoser 15 diagnoses the flow rate value of liquid products that do not contain the corrected slurry S1 in accordance with the external factor diagnosis rules as well as the measurement diagnosis rules.

$$HPV = PV \times ((100\text{-}M) / 100) \qquad (2)$$

In the above formula (2), the PV represents the flow rate value (hereinafter, referred to as "flow rate measurement value") of the liquid product including the slurry S1 flowing through the pipe P measured by the sensor 11. The HPV represents flow rate value of the liquid product which does not include the revised slurry S1 (hereinafter, referred to as "flow rate correction value"). M represents a foreign matter contamination amount [%] calculated by the above equation (1).

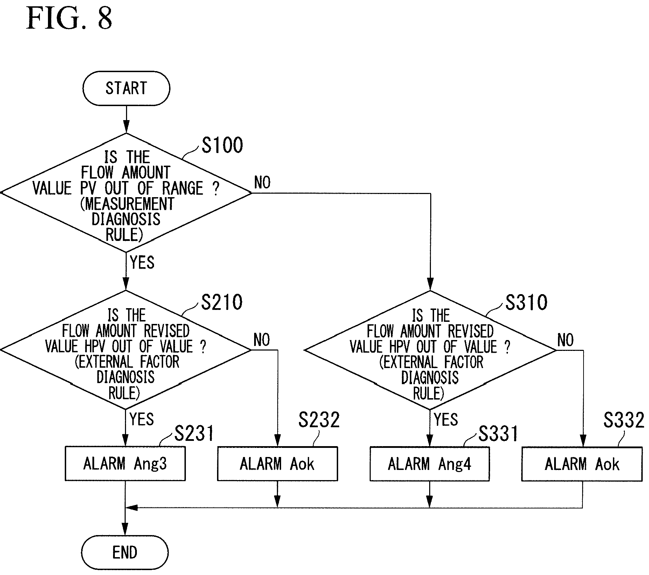

Next, in the second specific example, it will be described the diagnosis processing in the diagnoser 15 provided in the respective field devices 102 to 105. Fig. 8 is a flowchart showing a procedure of the diagnosis processing in the second specific example of the field device system 1 including the field device 10 in the embodiment of the present invention. Incidentally, Fig. 8 shows a procedure of a diagnosis processing which the diagnoser 15 performs when the field device 101 is operating. In the second specific example, the diagnosers 15 provided in each of the field devices 102 to 105 diagnoses the running condition of the pipe P in accordance with the process shown in Fig. 8. In the following description, representatively, the processing shown in Fig. 8 will be described as the processing of the diagnoser 15 provided in the field device 102.

The foreign matter volume Vs calculated on the basis of the measurement value of the slurry S1 measured by the foreign matter detection sensor is input as the external device information to the field device 102. The foreign matter detection sensor is desirable being disposed at a position close to the field device 102 in the pipe P between the field devices 101 and 102. Then, the diagnoser 15 is preset the external factor diagnosis rule by the controller 20 in order to diagnose the flow rate value of liquid product (flow rate correction value HPV) that do not contain the corrected slurry S1 based on external device information (foreign matter volume Vs) acquired from the foreign matter detection sensor and the flow value (flow rate measurement value PV) of the liquid product comprising the slurry S1 measured by the sensor 11.

In the second specific example, the flow rate value (parameter) of 4mA to 20mA representing that the operation condition of the pipe P is normal is preset to the diagnoser 15 as the measurement diagnosis rule to the flow rate measurement value PV. In the second specific example, for ease of explanation, the range (parameter) of the flow rate correction value HPV of the liquid products that do not contain the slurry S1 to diagnose the running condition of the pipe P is normal in the external factor diagnosis rule is also assumed to be in the range 4mA to 20mA similar to the measurement diagnosis rules.

Firstly, the diagnoser 15 diagnoses the measurement information acquired from the sensor information acquirer 12 in accordance with the measurement diagnosis rule (step S100). In the diagnosis in step S100, the diagnoser 15 determines whether the flow rate value PV represented in the measured information is the value outside the range of the flow rate value 4mA to 20mA which is set as the measurement diagnosis rule.

In result of the diagnosis of step S100, when the flow rate value PV represented by the measurement information is the value of outside the range of the flow rate value 4mA to 20mA ("YES" in step S100), the diagnoser 15 determines the running condition of the pipe P is abnormal, and then the diagnosis processing of the diagnoser 15 proceeds to step S210. For example, because much slurry S1 is contaminated into the liquid product F1 following in the pipe P, when the flow rate measurement value PV indicated in the measurement information is higher than the max flow rate value 20mA, the diagnosis processing of the diagnoser 15 proceeds to step S 210.

Then, the diagnoser 15 diagnoses (verifies) the diagnosis result that is "the running condition of the pipe P is abnormal" in step S100 in accordance with the external factor diagnosis rule (step S210). In the diagnosis in step S210, the diagnoser 15 calculates the foreign matter contamination amount M by the above equation (1) using the liquid product volume Vf calculated on the basis of the flow rate measurement value PV indicated in the measured information and the foreign matter volume Vs acquired as the external factor information from the external information acquirer 14. Thereafter, the diagnoser 15 calculates the flow correction value HPV corrected from the flow rate measurement value PV by the above equation (2). Then, the diagnoser 15 determines whether the flow rate correction value HPV is the value outside the range of flow rate value 4mA to 20mA which is set as the external factor diagnosis rule.

In the result of the diagnosis in step S210, if the flow rate correction value HPV is the value outside the range of the flow rate value 4mA to 20mA ("YES" in step S210), the diagnoser 15 determines that the running condition of the pipe P is abnormal even if the diagnoser 15 diagnoses according to the external factor diagnosis rule, and then the diagnosis processing of the diagnoser 15 proceeds to step S 231.

In step S231, the diagnoser 15 outputs the alarm Ang3 indicating that the running condition of the pipe P is abnormal even if the diagnoser 15 diagnoses in accordance with the external factor diagnosis rule to respectively the alarm display 16 and the communicator 17 to complete the diagnosis processing. The alarm display 16 turns on the abnormal lamp according to the alarm Ang3 acquired from the diagnoser 15. The communicator 17 transmits such as the alarm Ang3 acquired from the diagnoser 15 to the controller 20. The controller 20 displays the abnormal alarm corresponding to content of the alarm Ang3, and thereby indicates (notifies) that the current running condition of the pipe P is abnormal to the field worker. Incidentally, it is conceivable for the field worker to visit the location of the pipe P assuming that the process may be performed to prevent the contamination of the slurry S1 when the abnormal alarm corresponding to content of the alarm Ang3 is presented, because, for example, the flow rate of the liquid products flowing in the pipe P is more than current flow rate of the liquid products due to contaminating much slurry S1 into the liquid products F 1.

On the other hand, as a result of the diagnosis in the step S210, if the flow rate correction value HPV is inside the range of 4mA to 20mA ("NO" in step S210), the diagnoser 15 determines the running condition of the pipe P is not abnormal if the diagnosis is performed in accordance with the external factor diagnosis rule, the diagnosis processing of diagnoser 15 proceeds to step S232.

In step S232, the diagnoser 15 outputs the alarm Aok representing that the running condition of the pipe P is normal to each of the alarm display 16 and the communicator 17 even if the diagnosis is performed in accordance with the external factor diagnosis rule, and thereby completes the diagnosis processing. Thus, the alarm display 16 turns on the normal lamp according to content of the alarm Aok acquired from the diagnoser 15. And the communicator 17 transmits the alarm Aok acquired from the diagnoser 15 to the controller 20. The controller 20 displays the normal alarm corresponding to content of the alarm Aok to notify that the running condition of the current pipe P is normal to the field worker.

On the other hand, as a result of the diagnostic steps S100, if the flow rate correction value HPV is the value inside the range of the flow rate value 4mA to 20mA ("NO" in step S100), the diagnoser 15 determines that the running condition of the pipe P is normal, the diagnosis processing of the diagnoser 15 proceeds to step S 310.

The diagnoser 15 diagnoses (verifies) the diagnosis result that the "running condition of the pipe P is normal" in step S100 in accordance with the external factor diagnosis rule (step S310). At diagnosis in step S310, similar to the diagnosis in step S210, the diagnoser 15 determines whether the flow rate correction value HPV is the value outside the range of flow rate value 4mA to 20mA which is set as the external factor diagnosis rule.

In result of the diagnosis of step S310, if the flow rate correction value HPV is the value outside the range of the flow rate value 4mA to 20mA ("YES" in step S310), the diagnoser 15 determines the running condition of the pipe P is not normal if the diagnosis is performed in accordance with the external factor diagnosis rule, and then the diagnosis processing of the diagnoser 15 proceeds to step S331. For example, in spite that the flow rate measurement value PV indicating the measured information is lower value than the lower limit 4mA because much slurry S1 is contaminated into the liquid product F1 flowing in the pipe P, when it is determined that "running condition of the pipe P is normal" in spite that the flow rate of the liquid products F1 flowing into the pipe P is actually low, the diagnosis processing of the diagnoser 15 proceeds to step S331.

In step S331, the diagnoser 15 outputs the alarm Ang4 indicating that the running condition of the pipe P is abnormal if the diagnosis is performed in accordance with the external factor diagnosis rule to respectively the alarm display 16 and the communicator 17 to complete the diagnosis processing. The alarm display 16 turns on the abnormal lamp according to the alarm Ang4 acquired from the diagnoser 15. The communicator 17 transmits such as the alarm Ang4 acquired from the diagnoser 15 to the controller 20. The controller 20 displays the abnormal alarm corresponding to the alarm Ang4, and thereby indicates that the running condition of the pipe P is abnormal to the field worker. It is conceivable for the field worker to visit the location of the pipe P assuming that the process may be performed to prevent the contamination of the slurry S1 when the abnormal alarm corresponding to content of the alarm Ang4 is presented, because, for example, it is detected that the flow rate is normal in spite that the flow rate of the liquid products flowing in the pipe P is actually low due to contaminating much slurry S1 into the liquid products F1.

On the other hand, as a result of the diagnosis in the step S310, if the flow rate correction value HPV is inside the range of 4mA to 20mA ("NO" in step S210), the diagnoser 15 determines the running condition of the pipe P is normal if the diagnosis is performed in accordance with the external factor diagnosis rule, the diagnosis processing of diagnoser 15 proceeds to step S332.

In step S332, the diagnoser 15 outputs the alarm Aok representing that the running condition of the pipe P is normal to each of the alarm display 16 and the communicator 17 even if the diagnosis is performed in accordance with the external factor diagnosis rule, and thereby completes the diagnosis processing. Thus, the alarm display 16 turns on the normal lamp. The controller 20 displays (notifies) that the running condition of the current pipe P is normal to the field worker.

Thus, each of the field device 102 to 105 arranged on the pipe P in the field device system 1 of the second specific example diagnoses the current running condition of the pipe P (the current flow rate of the liquid products flowing in the pipe P in the second specific example) including the external factor (the volume of the contaminated foreign matter (slurry S1) which the foreign matter detection sensor detected in the second specific example). Then, in the field device system 1 in the second specific example, each of the field device 102 to 105 present (notify) the diagnosis result by the alarm display 16 and the controller 20, same as the first specific example, to the field worker operating the operation in the plant. The running condition of the pipe P presented by each of the field device 102 to 105 represents a result that the accuracy of the diagnosis is improved by the diagnosis including the external factor, same as the first specific example, if one of the field devices 102-105 notifies that the running condition of the pipe P is abnormal, the running condition is likely to be original abnormality. Therefore, the field worker can perform the operation same as the first specific example based on the highly accurate notification.

In the second specific example, the configuration is showed that the foreign matter volume Vs calculated based on the measurement value of the foreign matter detection sensor is input as the external device information to the respective field devices 102 to 105. However, the external device information is not limited to the external device information shown in the second specific example. For example, it may be constituted that the measurement value itself of the foreign matter detection sensor is inputted to the respective field devices 102 to 105 as the external device information. In this case, the diagnoser 15 provided in the respective field devices 102 to 105 calculates the foreign matter volume Vs utilizing existing technology from the measurement value of the foreign matter detection sensor acquired as the external device information, and then diagnoses the running condition of the pipe P by the above-mentioned processing.

In the second specific example, one example of a case where a plurality of slurry S1 is contaminated in a liquid product F1 and following together in the pipe P (foam (Coriolis) as well), it may be considered as well if the foreign matter (slurry S1) has ended up deposited in the pipe P. In this case, the foreign matter contamination amount M [%] can be calculated by the following equation (3) from the cross-sectional area As of the slurry S1 that is deposited in the pipe P and the cross-sectional area Ap of the pipe P.

$$M = A / P \cdots (3)$$

Incidentally, the cross-sectional area As of the deposited slurry S1, for example, can be calculated based on the measurement value of the foreign matter detection sensor installed in the pipe P (it may be included in the field devices 10). Since the cross-sectional area As can also be calculated by utilizing the existing technology, a detailed description thereof will be omitted.

In a case of dealing with the foreign matter (slurry S 1) that is ended up deposited in the pipe P in the second specific example, the cross-sectional area Ap of the pipe P, the cross-sectional area As which is calculated based on the measurement values of the foreign matter detection sensor, or the measurement value itself of the foreign matter detection sensor is inputted to each of the field devices 102 to 105 as the external device information. The diagnoser 15 provided in each of the field devices 102 to 105 calculates the foreign matter contamination amount M by the existing technologies and the above equation (3) utilizing the external device information, and then calculates the flow rate correction value HPV corrected from the flow rate measurement value PV by the equation (2). The diagnoser 15 diagnoses the running condition of the pipe P by the above described processing. However, in the case of dealing with the foreign matter (slurry S1) deposited in the pipe P in the second specific example, since it is considered that the variation of the cross-sectional area Ap and As is small by the deposition of the foreign matter, it may be constituted that the foreign matter contamination amount M calculated by the above equation (3) is inputted to each of the field devices 102 to 105 as the external device information at intervals of a predetermined period. Also likewise in this configuration, the diagnoser 15 diagnoses the running condition of the pipe P by above described performing of the subsequent processing for calculating the flow rate correction value HPV corrected from the flow rate measurement value PV by the above equation (2).

In the second specific example, the configuration was described that the external device information which each of the field devices 102 to 105 acquires is only information based on the measurement value in which the foreign matter detection sensor is measured.

However, even in the second specific example, same as the first specific example, according to be inputted the external device information of the field device 101 which can be the external factor affecting the respective field devices 102 to 105 and other field devices 102 to 105, each of the field devices 102 to 105 further improves the accuracy of detecting the abnormality, and may further reduce the burden of operation of which the field worker operates.

<Third specific example>

Next, in the field device system 1 constituted in the plant installing the field devices 10, third specific example that the field device system 1 diagnoses the running condition of the equipment including the external factor will be described. In the third specific example, construction of each of the equipment disposed in the plant and a field device system 1 is the same as in the first specific example shown in Fig. 5. Accordingly, in the third specific example, same signs are used to the signs granted to each of the equipment shown in Fig. 5 in this description. The detailed description regarding the arrangement of the equipments in the plant and the operation of the each of the field devices 10 according to the third specific example will be omitted.

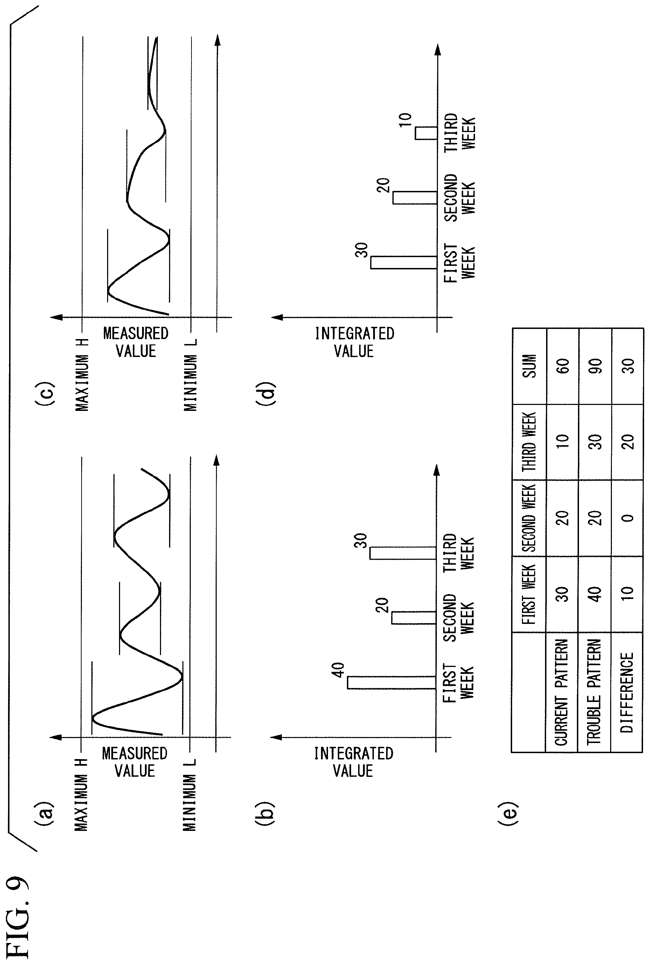

The third specific example is that it is able to diagnose a fault condition due to aged deterioration of the sensor 11 provided in the field device 10 to notify the abnormality of the field device 10. Fig. 9 is a diagram showing a third specific example of the operation of the field device system 1 including the field device 10 in the embodiment of the present invention.

Fig. 9 (a) shows an example of a change in time series of a standard measurement value output when a sensor similar to the sensor 11 provided in the field device 10 failed. Further, Fig. 9(b) shows an example of feature pattern (hereinafter, referred to as "fault pattern") which the integrated value when the fault condition is patterned by integrating the absolute value of the difference between the maximum value and the minimum value of the standard measurement value acquired when the same sensor as the sensor 11 provided in the field device 10 failed each one week. Also Fig. 9(c) shows an example of change (history) in time series of measurement value by the sensor 11 provided in the field device 10 outputted. Fig. 9(d) shows an example of feature pattern (hereinafter, referred to as "current pattern") which is patterned the integrated value of the measurement value the current sensor 11 outputted by accumulating the absolute value of the difference between the maximum value and the minimum value of the change in the measurement value which the sensor 11 provided in the field device 10 outputted in every one week. Further, Fig. 9 (e) shows an example of the table calculated the difference between the integrated value in the failure pattern shown in Fig. 9(b) and the integrated value in the current pattern shown in Fig. 9(d) for each week. Incidentally, numbers represented in Fig. 9(b), Fig. 9(d), and Figure 9(e) are examples of the integrated values.

The sensor 11 in a condition of operating normally, for example, outputs constant measurement value between the upper limit H and the lower limit L in the measurement value shown in Fig. 9(a) and Fig. 9(c). Therefore, the feature pattern in the sensor 11 in a state of operating normally remains unchanged in each week. For example, the integrated value of the feature pattern in the sensor 11 in a state of operating normally is constant at "30". Therefore, an example corresponding to the current sensor 11 provided in the field device 10 shown in Fig. 9(c) and Fig. 9(d) is equivalent to a condition in which the sensor 11 is faulty.

In the third specific example, it is inputted information representing an integrated value of the fault pattern shown in Fig. 9(b) as the external device information to each of the field devices 102 to 105. Then, in the third specific example, the sensor 11 provided in each of the field devices 102 to 105 diagnoses the fault condition of the sensor 11 using the current pattern generated based on the history of the measurement value and the above-described fault pattern.

More specifically, the field devices 102 to 105 temporarily stores (sequentially updates) a history of the measurement value in the predetermined period in which the sensor 11 measured (3 weeks in the example shown in Fig. 9), and generates the current pattern representing the absolute value of the difference between the maximum value and the minimum value of the variation (history) of the measurement values each week based on the history of the stored measurement values, as shown in Fig. 9(d). Thereafter, the field devices 102 to 105 calculates the difference between the integrated value included in the current pattern and the integrated value included in the fault pattern each corresponding period (each week in the example shown in Fig. 9) to sum them, and diagnoses the value of the difference of the summed integrated value according to the external factor diagnosis rule.

Incidentally, since the configuration which temporarily stores a history of the measurement value measured by the sensor 11 during a predetermined period (sequentially updating) can be achieved by applying the existing technology in each of the field devices 102 to 105, a detailed description thereof will be omitted. Further, in each of the field devices 102 to 105, since a method of generating a current pattern based on a history of a temporarily stored measurement value can use the existing technology, a detailed description thereof will be omitted.

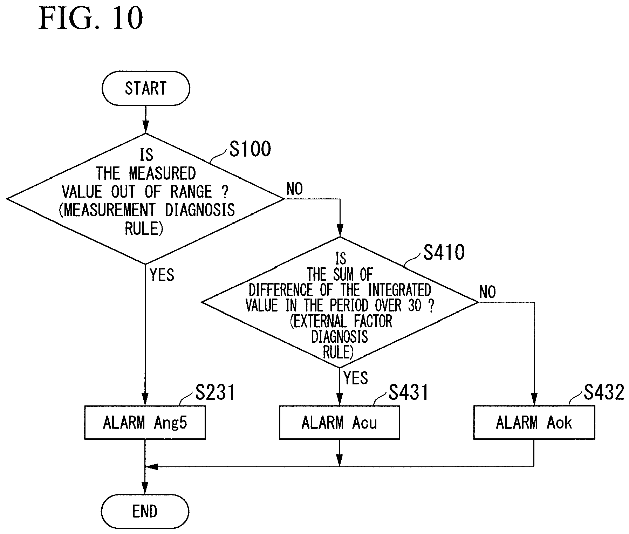

Next, in the third specific example, it will be described the diagnosis processing in the diagnoser 15 provided in the respective field devices 102 to 105. Fig. 10 is a flowchart showing a procedure of the diagnosis processing in the third specific example of the field device system 1 including the field device 10 in the embodiment of the present invention. Fig. 10 shows a procedure of the diagnosis processing which the diagnoser 15 in a case that the field device 101 is in operation. In the third specific example, each of the field devices 102 to 105 diagnoses the fault condition of the sensor 11 provided in each of the field devices. In the following description, representatively, the processing shown in Fig. 10 will be described as the processing of the diagnoser 15 provided in the field device 102.

Here, the diagnoser 15 provided in the field device 102 acquires information representing the integrated value of the fault pattern as the external device information. Further, the diagnoser 15 is preset the external factor diagnosis rule by the controller 20 in order to diagnose the fault condition of the sensor 11 on the basis of as the current pattern and fault pattern. More specifically, the external factor diagnosis rule is preset in order to confirm the sum of the difference of the integrated value in the current pattern and the integrated value in the fault pattern in each the corresponding period is more than "30" in the processing shown in Fig. 10.

In the third specific example, the flow rate value (parameter) in the range (e.g., the range 4mA to 20mA) indicating that the running condition of the pipe P is normal is preset to the diagnoser 15 as the measurement diagnosis rule for the measurement value which the sensor 11 measured. The diagnoser 15 diagnoses the fault condition of the sensor 11 in accordance with the external factor diagnosis rule in the case that it is diagnosed that the running condition of the pipe P is normal in accordance with the measurement diagnosis rule, for ease of explanation in the third specific example. Further, the diagnosis of running condition of the pipe P in accordance with the external factor diagnosis rule corresponding to the measurement value which is performed on the measurement value measured by the sensor 11 is omitted, for ease of explanation in the third specific example. That is, in the third specific example, the description will be made as the diagnosis of the running condition of the pipe P performed based on the measurement value measured by the sensor 11 is only the diagnosis according to the measurement diagnosis rule, as same as a conventional field device.

Firstly, the diagnoser 15 diagnoses the measurement information acquired from the sensor information acquirer 12 in accordance with the measurement diagnosis rule (step S100). In the diagnosis in step S100, the diagnoser 15 determines whether the flow rate value represented in the measured information is the value outside the range of the flow rate value which is set as the measurement diagnosis rule.

In result of the diagnosis of step S100, when the flow rate value represented by the measurement information is the value outside the range of the flow rate value set in the measurement diagnosis rule ("YES" in step S100), the diagnoser 15 determines the running condition of the pipe P is abnormal, and then the diagnosis processing of the diagnoser 15 proceeds to step S231.

In step S231, in result that the diagnoser 15 diagnoses according to the external factor diagnosis rule, the diagnoser 15 outputs the alarm Ang5 indicating that the running condition of the pipe P is abnormal to respectively the alarm display 16 and the communicator 17 to complete the diagnosis processing. Thus, the alarm display 16 turns on the abnormal lamp, the controller 20 represents (notifies) that the running condition of the current pipe P is abnormal to the field worker.

In result of the diagnosis of step S100, when the flow rate value represented by the measurement information is the value within the range of the flow rate value set in the measurement diagnosis rule ("NO" in step S100), the diagnoser 15 determines the running condition of the pipe P is normal, and then the diagnosis processing of the diagnoser 15 proceeds to step S410.

The diagnoser 15 diagnoses the fault condition in accordance with the external factor diagnosis rule (step S410). In the diagnosis in step S410, the diagnoser 15 updates the flow rate value stored in the history of the measurement values to the flow rate value represented in the measurement information. In an update of the flow rate value for the history of the measurement value, the diagnoser 15 discards the oldest flow rate value in the history of the measurement values to newly store the current flow rate value. Then, the diagnoser 15 generates a current pattern based on each flow rate value stored in the history of the measurement value. Thereafter, the diagnoser 15 calculates the difference between the integrated value included in the generated current patterns and the integrated value included in the fault pattern acquired as the external device information in each corresponding week to sums them, and determines whether the value of the summed difference of the integrated value is more than "30" set as the external factor diagnosis rule.

In the result of the diagnosis in step S410, if the value of difference of the integrated value which is summed the difference between the integrated value included in the current pattern and the integrated value included in the fault pattern in each corresponding week is more than "30" ("YES" in step S410), the diagnoser 15 diagnoses that the sensor 11 is in fault condition if the diagnosis is performed in accordance with the external factor diagnosis rule, and the diagnosis processing of the diagnoser 15 proceeds to step S431.

In step S431, in the result of diagnosing in accordance with the external factor diagnosis rules, the diagnoser 15 outputs an alarm Acu for warning that the sensor 11 is in fault condition to each of the alarm display 16 and the communicator 17 to complete the diagnosis processing. Thus, the alarm display 16 lights a warning lamp corresponding to the alarm Acu acquired from the diagnoser 15. The communicator 17 transmits such as the alarm Acu acquired from the diagnoser 15 to the controller 20. The controller 20 displays the warning alarm corresponding to the alarm Acu represents (notifies) that the sensor 11 provided in the field device 102 is likely to be a failure to the field worker. Incidentally, if the warning alarm is represented in accordance with the alarm Acu, it is conceivable for the field worker to visit the location installed the field device 102 assuming that the process may be performed to replace the sensor 11 provided in the field device 102 or the device 102 itself. In addition, it is desirable for the field worker to confirm whether the sensor 11 practically failed before changing the field sensor 11 provided in the device 102 or the field device 102 itself by the carrying operation terminal.

In the result of the diagnosis in step S410, if the value of difference of the integrated value which is summed the difference between the integrated value included in the current pattern and the integrated value included in the fault pattern in each corresponding week is not more than "30" ("YES" in step S410), the diagnoser 15 diagnoses that the sensor 11 is not in fault condition even if the diagnosis is performed in accordance with the external factor diagnosis rule, and the diagnosis processing of the diagnoser 15 proceeds to step S432.

In step S432, in the result of diagnosing in accordance with the external factor diagnosis rules, the diagnoser 15 outputs an alarm Aok indicating that the sensor 11 is in normal condition to each of the alarm display 16 and the communicator 17 to complete the diagnosis processing. Thus, the alarm display 16 lights a normal lamp corresponding to the alarm Aok acquired from the diagnoser 15. The communicator 17 transmits such as the alarm Aok acquired from the diagnoser 15 to the controller 20. The controller 20 displays the normal alarm corresponding to the alarm Acu represents (notifies) that the sensor 11 provided in the field device 102 is likely to be a failure to the field worker.

Such the configuration and the processing, the field device system 1 of the third specific example diagnoses the fault condition of the sensor 11 provided in the respective field devices 102 to 105 that are arranged on the pipe P. Then, the field device system 1 of the third specific example, each of the field devices 102 to 105 represents (notifies), same as the first specific example, the diagnosis result by the alarm display 16 and the controller 20 to the field worker performing the operation in the plant. The fault condition of the sensor 11 provided in the respective field devices 102 to 105 presented here is also the result of improved accuracy of the diagnosis. Therefore, when it is notified that a condition in which the sensor 11 provided in one of the field devices 102 to 105 is fault, the sensor 11 is likely to be failed. Therefore, it is desirable for the field worker to confirm the field device 10 that notified that the sensor 11 is in a fault condition. Incidentally, in the results of confirming the field device 10 which notified that the sensor 11 is in fault condition, if the sensor 11 is not in the fault condition, same as the flow of the processing and the operation (processing sequence) in the plant shown in Fig. 4, the field worker may change (properly correct) the information of the external factor diagnosis rule and fault pattern.

Incidentally, in the third specific example, the configuration is shown that the external device information to be input to each of the field devices 102 to 105 is one fault pattern. However, the external device information to be input to each of the field devices 102 to 105 is not intended to be limited to one, a plurality of fault patterns may be configured to input as the external device information representing the condition in which same sensor as the sensor 11 provided in each of the field devices 102 to 105 is fault. In this case, it is desirable that the external factor diagnosis rule which is set to the diagnoser 15 provided in each of the field devices 102 to 105 is to be set so that the diagnoser 15 diagnoses the fault condition of the sensor 11 on the basis of plurality of fault pattern and the current pattern acquired as the external device information. Thus, each of the field devices 102 to 105 may further improve the accuracy of diagnosing the fault condition of the sensor 11, the burden of the operation in which the field worker performed can be further reduced.

In the third embodiment, the external factor diagnostic rule set to each of the field devices 102 to 105 is used when diagnosing a fault condition of the sensor 11 based on the value summed the difference between the integrated value of the currently pattern and the integrated value of the fault pattern in every corresponding period. However, the external factor diagnosis rule to be set to each of the field devices 102 to 105 are not intended to be limited to the external factor diagnosis rule shown in the third specific example. For example, the external factor diagnosis rule may be a rule that diagnosing that the sensor 11 is in fault condition based on the result of the pattern matching which matches a current pattern and a fault pattern, In this case, for example, the diagnoser 15 calculates the similarity representing the degree that the current pattern and the fault pattern is similar, the diagnoser 15 determines whether a sensor 11 is in fault condition in accordance with the value of the calculated similarity. Since the method of pattern matching and the method of calculating similarity can utilize the existing technology, a detailed description thereof will be omitted.

As mentioned above, according to the embodiment of the present invention, by inputting the external device information that can be the external factor affecting the diagnosis to the field device arranged on the equipment which is disposed in the plant, it can diagnose (decide) in accordance with the diagnosis rule added the result of diagnosing according to the diagnosis rule as same as the conventional field equipment, corresponding to the external device information. Thus, in the embodiment of the present invention, the field device diagnoses the running condition when the equipment is operating including the external factor, which can improve the accuracy of detecting the abnormality of the installed equipment more than conventional field device.

Moreover, in the embodiment of the present invention, by inputting the external device information corresponding to the information acquired by the sense of the field worker belonging to the plant to the field device, the field worker can reflect in advance the settings such as the conditions of the external factor when determining finally not to perform the operation based on knowledge to the diagnosis rule to be added corresponding to the external device information. Thus, in the embodiment of the present invention, the field device itself can finally determine based on knowledge of the field worker performed by visiting and confirming the external factors by the field worker in the conventional plant. That is, in the embodiment of the present invention, the field device itself can perform the determination similar to the determination which conventionally the field worker performed.

Further, in the embodiment of the present invention, the field device system is constituted connected a plurality of field devices and a controller by a dedicated communication network constituted in the plant. Then, in the embodiment of the present invention, the controller preliminarily set the diagnosis rule corresponding to the external device information which each of the field devices acquired, and each of the field devices transmits (notifies) the information of the diagnosis result of diagnosing the running condition of the equipment. At this time, in the case that the field device transmitted (notified) the abnormality of the running condition of the equipment, if there is no need to perform the operation corresponding to the running condition of the equipment, it can be changed the diagnosis rule corresponding to the preset external device information by the controller. Incidentally, in the embodiment of the present invention, it can be changed the diagnosis rule corresponding to the preset external device information by the operating unit provided in the field device and operation terminal connected to the field device.

By the above-noted description, in the embodiment of the present invention, it is no need for the field worker to visit the location in each time the field device transmits (notifies) the abnormality of the running condition of the equipment, it is possible to reduce the burden of the operation of the field worker.

Moreover, in the embodiment of the present invention, the information acquired from the other field devices and the external device already installed in the equipment or the plant is inputted to the field device as the external device information. Thus, in the embodiment of the present invention, without greatly changing the configuration being already constituted, it can improve the accuracy of detecting an abnormality of the operation of the equipment by utilizing the existing configuration in the plant, wherein it is possible to reduce the burden of the field worker.

For example, a program for realizing processes performed by the individual components constituting the field device 10 shown in Fig. 1 can be recorded on a computer-readable recording medium. The program recorded on the recording medium is loaded into a computer system, by being executed, various processes may be performed as described above according to the field device 10, the field device system 1 of the present embodiment. Incidentally, a "computer system" mentioned here may include an OS and hardware such as peripheral devices. Moreover, in the case utilizing a WWW system, the "computer system" includes homepage providing environment (or display environment). A "computer-readable recording medium" refers to a storage device such as a flexible disc, a magneto-optical disk, a ROM, a writable nonvolatile memory such as a flash memory, a portable medium such as a CD-ROM, and such as a hard disk constituted in a computer system.

Furthermore, a "computer-readable recording medium" includes those that holds program for a fixed period of time such as a volatile memory (e.g. DRAM (Dynamic Random as in the Access Memory)) in the computer system as a server or a client when the program is transmitted through a communication line such as a network such as the Internet or a telephone line. In addition, the program may be transmitted from a computer system storing the program in a storage device or the like via a transmission medium or by transmission waves in the transmission medium to another computer system. Here, a "transmission medium" for transmitting the program refers to a medium having a function of transmitting information such as a network such as the Internet (communication network) or a communication line such as a telephone line. Further, the program may be the one for implementing a part of the above functions.

Moreover, it may be those realized in combination with a program already recorded in the above-described functions in the computer system, a so-called differential file (differential program).

The embodiment of the present invention has been described with reference to the drawings. Specific configurations are not limited to the above described specific examples, also includes various modifications without departing from the scope of the present invention.

**Claims**

1. A field device for measuring information associated with each of equipments installed in a plant comprising:

    a measurer configured to measure running condition of the equipment, and to output measurement information representing result of the measurement;
    a diagnoser configured to diagnose the running condition of the equipment represented by the measurement information in accordance with predetermined first diagnosis rule, to diagnose result diagnosed in accordance with the first diagnosis rule in accordance with predetermined second diagnosis rule, and to output diagnosis result information representing result diagnosed in accordance with the second diagnosis rule as result of diagnosing the running condition of the equipment; wherein
the second diagnosis rule is configured to be set condition for confirming influence of an external factor to the running condition of the equipment.

2. The field device according to claim 1, further comprising;
an external information acquirer configured to acquire external factor information including information which may be the external factor influencing the field device from an external device installed outside of the field device, wherein
the second diagnosis rule corresponds to the external factor information, and is configured to be set condition for confirming that the field device is not influenced by the external factor included in the external factor information when the measurer measures the running condition of the equipment.

3. The field device according to claim 2, wherein
the external factor information includes information representing the running condition of the equipment which is positioned in either or both steps before or after the equipment in which the field device is installed in the step of the plant and performs the operation that may be the external factor.

4. The field device according to any one of claim 2 or 3, wherein
the external factor information configured to include peripheral information representing condition and environment of the position where the field device is installed which may be the external factor.

5. The field device according to claim 4, wherein
the peripheral information includes information corresponding to information acquired by the sense of field worker performing a task for each of the equipment in the plant.

6. The field device according to any one of claims 1 to 5, further comprising:
a notifier configured to notify the running condition of the equipment represented by the diagnosis result information; wherein
the notifier further comprises:
a display configured to display the running condition of the equipment represented by the diagnosis result information; and
a communicator configured to transmit the diagnosis result information via a communication network constructed in the plant.

7. The field device according to claim 6, wherein

the second diagnosis rule is configured to be sent via the communication network, and
the communicator is configured to acquire the second diagnosis rule transmitted via the communication network and to set it to the diagnoser.

8. A field device system for monitoring each of equipments installed in a plant and controlling operation of the equipments comprising:
a field device configured to measure information in associate with the equipment;
a controller configured to communicate with the field device via a communication network constructed in the plant; wherein
the field device further comprising:
a measurer configured to measure running condition of the equipment, and to output measurement information representing result of the measurement;
a diagnoser configured to diagnose the running condition of the equipment represented by the measurement information in accordance with predetermined first diagnosis rule, to diagnose result diagnosed in accordance with the first diagnosis rule in accordance with predetermined second diagnosis rule, and to output diagnosis result information representing result diagnosed in accordance with the second diagnosis rule as result of diagnosing the running condition of the equipment; and
a communicator configured to transmit the diagnosis result information via the communication network; wherein
the controller transmits the second diagnosis rule which is set condition to confirm influence of an external factor to running condition of the equipment measured by the measurer, acquires the diagnosis result information obtained from the field device, and displays the running condition of the equipment represented by the diagnosis result information.

9. The field device system according to claim 8, further comprising;
an external information acquirer configured to acquire external factor information including information which may be the external factor influencing the field device from an external device installed outside of the field device, wherein
the second diagnosis rule corresponds to the external factor information, and is configured to be set condition for confirming that the field device is not influenced by the external factor included in the external factor information when the measurer measures the running condition of the equipment.

10. The field device system according to any one of claim 8 to 9, wherein
the external factor information includes information representing the running condition of the equipment which is positioned in either or both steps before or after the equipment in which the field device is installed in the step of the plant and performs the operation that may be the external factor.

11. The field device system according to any one of claim 8 to 10, wherein
the external factor information includes peripheral information which may be the external factor and which represents peripheral condition and environment of the position where the field device is installed.

12. A diagnosing method configured to diagnose running condition of each of equipments installed in a plant comprising:

measuring running condition of the equipment, and outputting measurement information representing result of the measurement;
diagnosing the running condition of the equipment represented by the measurement information in accordance with predetermined first diagnosis rule, diagnosing result diagnosed in accordance with the first diagnosis rule in accordance with predetermined second diagnosis rule, and outputting diagnosis result information representing result diagnosed in accordance with the second diagnosis rule as result of diagnosing the running condition of the equipment; wherein the second diagnosis rule is configured to be set condition for confirming influence of an external factor to the running condition of the equipment.

13. The diagnosing method according to claim 12, further comprising;
acquiring external factor information including information which may be the external factor influencing the field device from an external device installed outside of the field device, wherein
the second diagnosis rule corresponds to the external factor information, and is configured to be set condition for confirming that the field device is not influenced by the external factor included in the external factor information when the measurer measures the running condition of the equipment.

14. The diagnosing method according to any one of claim 12 or 13, wherein
the external factor information includes information representing the running condition of the equipment which is positioned in either or both steps before or after the equipment in which the field device is installed in the step of the plant and performs the operation that may be the external factor.

15. The diagnosing method according to any one of claim 12 to 14, wherein
the external factor information includes peripheral information which may be the external factor and which represents peripheral condition and environment of the position where the field device is installed.

FIG. 1

# FIG. 2

START

S100 — MEASUREMENT DIAGNOSIS RULE ?
- NO →
- YES ↓

S210 — EXTERNAL FACTOR DIAGNOSIS RULE 1 ?
- NO →
- YES ↓

S310 — EXTERNAL FACTOR DIAGNOSIS RULE 4 ?
- NO →
- YES ↓

S221 — EXTERNAL FACTOR DIAGNOSIS RULE 2 ?
- NO →
- YES ↓

S222 — EXTERNAL FACTOR DIAGNOSIS RULE 3 ?
- NO →
- YES ↓

S321 — EXTERNAL FACTOR DIAGNOSIS RULE 5 ?
- NO →
- YES ↓

S322 — EXTERNAL FACTOR DIAGNOSIS RULE 6 ?
- NO →
- YES ↓

S231 — ALARM Ang1
S232 — ALARM Aok
S233 — ALARM Ang2
S234 — ALARM Aok
S331 — ALARM Aok
S332 — ALARM Ang3
S333 — ALARM Aok
S334 — ALARM Ang4

END

EP 3 168 703 A1

FIG. 3

# FIG. 4

| FIELD DEVICE /101 | FIELD DEVICE /102 | CONTROLLER /20 | WORKER |
|---|---|---|---|

SET AN EXTERNAL FACTOR DIAGNOSIS RULE
S10

TRANSMIT CONTROL SIGNAL
S11

**MEASURE RUNNING CONDITION (OUTPUT MEASURED INFORMATION)** /S20

**DIAGNOSE RUNNING CONDITION (MEASUREMENT DIAGNOSIS RULE)** /S30

OUTPUT THE EXTERNAL DEVICE INFORMATION
S35

**DIAGNOSE RUNNING CONDITION (EXTERNAL FACTOR DIAGNOSIS RULE)** /S40

TRANSMIT THE DIAGNOSIS RESULT INFORMATION S45

**DISPLAY ALARM** /S50

**DISPLAY ALARM** /S60

**CHECK ALARM** /S61

PERFORM THE OPERATION, OR CHANGE THE EXTERNAL FACTOR DIAGNOSIS RULE
S70

CHANGE THE EXTERNAL FACTOR DIAGNOSIS RULE
S71

EP 3 168 703 A1

# FIG. 5

EP 3 168 703 A1

## FIG. 6

```
                    START
                      │
                      ▼
              ┌──────────────┐
              │      IS      │  S100
              │ THE MEASURED │ ────── NO ──────────────────────────┐
              │VALUE OUT OF RANGE ?│                               │
              │(MEASUREMENT DIAGNOSIS│                             │
              │     RULE)    │                                     │
              └──────────────┘                                     │
                   │ YES                                           │
                   ▼                                               ▼
          ┌──────────────┐                             ┌──────────────┐
          │    IS THE    │ S210                        │    IS THE    │ S310
          │ PUMP RUNNING ?│ ──── NO ──┐                │ PUMP RUNNING ?│ ──── NO ──┐
          │(EXTERNAL FACTOR│          │                │(EXTERNAL FACTOR│          │
          │  DIAGNOSIS   │           │                │  DIAGNOSIS   │            │
          │    RULE)     │           │                │    RULE)     │            │
          └──────────────┘           │                └──────────────┘            │
               │ YES  S231           │ S232                │ YES  S331            │ S332
               ▼                     ▼                     ▼                      ▼
        ┌──────────────┐     ┌──────────────┐     ┌──────────────┐      ┌──────────────┐
        │  ALARM Ang1  │     │  ALARM Aok   │     │  ALARM Aok   │      │  ALARM Ang2  │
        └──────────────┘     └──────────────┘     └──────────────┘      └──────────────┘
               │                     │                     │                      │
               ◄─────────────────────┴─────────────────────┴──────────────────────┘
               ▼
             END
```

## FIG. 7

# FIG. 8

```
                    ┌─────────┐
                    │  START  │
                    └─────────┘
                         │
                         ▼
                    ╱────────────╲           S100
                  ╱    IS THE      ╲
                ╱   FLOW AMOUNT      ╲
              ╱  VALUE PV OUT OF RANGE ?╲  NO
             ╲    (MEASUREMENT         ╱ ─────────────────────────────┐
               ╲   DIAGNOSIS         ╱                                │
                 ╲    RULE)        ╱                                  │
                   ╲────────────╱                                    │
                      │ YES                                          │
                      ▼                                              ▼
              ╱────────────────╲       S210          ╱────────────────╲       S310
            ╱     IS THE          ╲                ╱     IS THE          ╲
          ╱   FLOW AMOUNT REVISED   ╲  NO        ╱   FLOW AMOUNT REVISED   ╲  NO
         ╲  VALUE HPV OUT OF VALUE ? ╱ ──┐      ╲  VALUE HPV OUT OF VALUE ? ╱ ──┐
           ╲  (EXTERNAL FACTOR      ╱    │        ╲  (EXTERNAL FACTOR      ╱    │
             ╲  DIAGNOSIS         ╱      │          ╲  DIAGNOSIS         ╱      │
               ╲   RULE)        ╱        │            ╲   RULE)        ╱        │
                 ╲────────────╱          │              ╲────────────╱          │
                    │ YES   S231   S232  │                 │ YES   S331   S332  │
                    ▼              ▼     ▼                 ▼              ▼     ▼
              ┌───────────┐  ┌───────────┐           ┌───────────┐  ┌───────────┐
              │ALARM Ang3 │  │ ALARM Aok │           │ALARM Ang4 │  │ ALARM Aok │
              └───────────┘  └───────────┘           └───────────┘  └───────────┘
                    │              │                       │              │
                    │              └───────────────────────┴──────────────┘
                    ▼
              ┌─────────┐
              │   END   │
              └─────────┘
```

# FIG. 9

(a)

(c)

(b)

(d)

(e)

| | FIRST WEEK | SECOND WEEK | THIRD WEEK | SUM |
|---|---|---|---|---|
| CURRENT PATTERN | 30 | 20 | 10 | 60 |
| TROUBLE PATTERN | 40 | 20 | 30 | 90 |
| DIFFERENCE | 10 | 0 | 20 | 30 |

EP 3 168 703 A1

# FIG. 10

```
                    ┌──────────┐
                    │  START   │
                    └──────────┘
                         │
                         ▼
                    ╱─────────╲         S100
                  ╱     IS      ╲
                ╱  THE MEASURED   ╲
              ╱  VALUE OUT OF RANGE ? ╲    NO
              ╲ (MEASUREMENT DIAGNOSIS╱ ────────┐
                ╲      RULE)      ╱             │
                  ╲            ╱                │
                    ╲────────╱                  ▼
                       │ YES              ╱──────────╲       S410
                       │                ╱      IS      ╲
                       │              ╱   THE SUM OF     ╲
                       │            ╱ DIFFERENCE OF THE INTEGRATED ╲   NO
                       │            ╲ VALUE IN THE PERIOD OVER 30 ? ╱ ────────┐
                       │              ╲  (EXTERNAL FACTOR ╱                   │
                       │                ╲  DIAGNOSIS    ╱                     │
                       │                  ╲   RULE)   ╱                       │
                       │                    ╲───────╱                        │
                       │                       │ YES                         │
                       ▼                       ▼                             ▼
               S231 ┌──────────┐      S431 ┌──────────┐         S432 ┌──────────┐
                    │ALARM Ang5│           │ALARM Acu │              │ALARM Aok │
                    └──────────┘           └──────────┘              └──────────┘
                       │                       │                        │
                       │◄──────────────────────┴────────────────────────┘
                       ▼
                  ┌──────────┐
                  │   END    │
                  └──────────┘
```

Europäisches
Patentamt

European
Patent Office

Office européen
des brevets

# EUROPEAN SEARCH REPORT

Application Number

EP 16 19 7942

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2005/267709 A1 (HEAVNER LOUIS W III [US] ET AL) 1 December 2005 (2005-12-01) * the whole document * ----- | 1-15 | INV. G05B23/02 |
| X | US 2014/261791 A1 (GRABAU TED DENNIS [US] ET AL) 18 September 2014 (2014-09-18) * the whole document * ----- | 1-15 | |
| X | US 2008/125884 A1 (SCHUMACHER MARK S [US] ET AL) 29 May 2008 (2008-05-29) * the whole document * ----- | 1-15 | |
| X | US 2008/103732 A1 (STOUPIS JAMES [US] ET AL) 1 May 2008 (2008-05-01) * paragraphs [0001], [0005], [0021], [0029], [0035] - [0047] * * figures 1,2 * ----- | 1-15 | |
| | | | TECHNICAL FIELDS SEARCHED (IPC) G05B |

The present search report has been drawn up for all claims

| Place of search | Date of completion of the search | Examiner |
|---|---|---|
| Munich | 10 March 2017 | Postemer, Patricia |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

......................................................................................
& : member of the same patent family, corresponding
document

EPO FORM 1503 03.82 (P04C01)

## EP 3 168 703 A1

This annex lists the patent family members relating to the patent documents cited in the above-mentioned European search report.
The members are as contained in the European Patent Office EDP file on
The European Patent Office is in no way liable for these particulars which are merely given for the purpose of information.

10-03-2017

| Patent document cited in search report | | Publication date | Patent family member(s) | | Publication date |
|---|---|---|---|---|---|
| US 2005267709 | A1 | 01-12-2005 | CN | 1954277 A | 25-04-2007 |
| | | | US | 2005267709 A1 | 01-12-2005 |
| US 2014261791 | A1 | 18-09-2014 | AR | 095272 A1 | 30-09-2015 |
| | | | CA | 2902198 A1 | 25-09-2014 |
| | | | CN | 104049628 A | 17-09-2014 |
| | | | CN | 204164465 U | 18-02-2015 |
| | | | EP | 2972624 A1 | 20-01-2016 |
| | | | JP | 2016512368 A | 25-04-2016 |
| | | | US | 2014261791 A1 | 18-09-2014 |
| | | | WO | 2014152109 A1 | 25-09-2014 |
| US 2008125884 | A1 | 29-05-2008 | CN | 101553764 A | 07-10-2009 |
| | | | CN | 103645727 A | 19-03-2014 |
| | | | EP | 2082300 A2 | 29-07-2009 |
| | | | JP | 5425629 B2 | 26-02-2014 |
| | | | JP | 2010505185 A | 18-02-2010 |
| | | | US | 2008125884 A1 | 29-05-2008 |
| | | | WO | 2008039379 A2 | 03-04-2008 |
| US 2008103732 | A1 | 01-05-2008 | CN | 101601057 A | 09-12-2009 |
| | | | EP | 2084660 A1 | 05-08-2009 |
| | | | US | 2008103732 A1 | 01-05-2008 |
| | | | WO | 2008054664 A1 | 08-05-2008 |

**EP 3 168 703 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2015221328 A
- JP 5425629 B